# EUROPEAN PATENT APPLICATION

(11) **EP 4 455 222 A1**
(43) Date of publication of application: **30.10.2024**
(21) Application number: 22911055.6
(22) Date of filing: 15.12.2022
(51) Int. Cl.: C08L 83/04, C08L 83/05, C08L 83/07, C08J 5/18, C08K 3/013

(54) **CURABLE SILICONE COMPOSITION HAVING HOT MELT PROPERTIES, CURED PRODUCT OF SAME, AND MULTILAYER BODY COMPRISING SAID COMPOSITION**

(30) Priority: 21.12.2021 JP 2021207389
(71) Applicant: Dow Toray Co., Ltd., Tokyo 140-8617 (JP)
(72) Inventor: YAMAZAKI Ryosuke, Ichihara-shi Chiba 299-0108 (JP); YAMAMOTO Shinichi, Ichihara-shi Chiba 299-0108 (JP); OZAKI Kouichi, Ichihara-shi Chiba 299-0108 (JP); IMAIZUMI Toru, Ichihara-shi Chiba 299-0108 (JP)
(74) Representative: Murgitroyd & Company
(86) International application number: PCT/JP2022/046146
(87) International publication number: WO 2023/120347

(57) **Abstract**

PROBLEM

To provide a curable silicone composition that has excellent curing properties and flow properties when heated and melted, and that enables fine filling, as well as excellent storage stability and thick molding properties as a whole composition, and that forms a hard cured product with low surface tack when cured; and to provide applications for the composition.

RESOLUTION MEANS

A curable silicone composition having hot-melt properties as a whole, containing: (A) a solid organopolysiloxane resin that contains (A1) an organopolysiloxane resin having a curing reactive functional group and containing 20 mol% or more of a Q unit, and (A2) an organopolysiloxane resin not having a curing reactive functional group and containing 20 mol% or more of a Q unit; (B) 10 to 100 parts by mass of a straight-chain or branched organopolysiloxane having a curing reactive functional group; (C) an organohydrogenpolysiloxane; and (D) particles containing a hydrosilylation reaction catalyst using a thermoplastic resin with a Tg in a range of 110 to 200°C.

## Description

### TECHNICAL FIELD

The present invention relates to a curable silicone composition that has excellent curing properties and flow properties when heated and melted, that can be microfilled, that has excellent storage stability as a whole composition, that can be molded with relatively high thickness, that forms a relatively hard cured product with low surface tack when cured, and that suitably provides a white or colored cured product. Furthermore, the present invention also relates to a sheet or film formed from the curable silicone composition, laminate bodies formed thereof, a method of manufacturing thereof, and application of a cured product made by curing the composition.

### BACKGROUND ART

Curable silicone compositions can be cured to form cured products having excellent heat resistance, cold resistance, electrical insulation, weather resistance, water repellency, and transparency, and are utilized in a wide range of industrial fields. In particular, the cured product of such a curable silicone composition of the present invention is generally applicable as a sealing agent for a semiconductor device because discoloration is less likely to occur as compared with other organic materials and there is less deterioration of physical properties over time.

The present applicant has proposed, in Patent Document 1 and Patent Document 2, a so-called hot-melt curable granular silicone composition and a reactive silicone composition for molding. These silicone compositions contain a large amount of inorganic filler to achieve these properties, and the melt viscosity is relatively high.

On the other hand, in recent years, semiconductor devices and other devices are becoming increasingly miniaturized, and miniaturizing of the substrate structure has become more pronounced. When sealing substrates having these miniature structures, low viscosity is required during sealing. In recent years, as semiconductor devices have become larger in area, film or sheet forms of encapsulants tend to be preferable.

Here, in Patent Document 3, the applicant also discloses a transparent hot-melt curable silicone sheet that uses silicone resin. However, organic solvents are essential in the manufacturing process of these compositions, and including inorganic fillers is difficult. However, due to these properties, all components are mixed and integrated, and thus storage stability is difficult to ensure. Furthermore, these curable silicone sheets have a problem where it is difficult to produce a sheet with a film thickness of 100 µm or more using the disclosed production method.

In order to ensure the storage stability of the curable silicone composition, catalysts that are activated by irradiation with high-energy rays such as UV light are sometimes used, and curable silicone adhesives containing these catalysts are proposed in Patent Document 4. However, these catalysts, especially in compositions with strong absorption or reflection in the ultraviolet region such as colored fillers and pigments, block high energy rays and inhibit the curing reaction, leading to a problem where sufficient use is not possible in applications requiring colorability including these pigments and fillers (for example, optical members such as reflectors and black sealants).

As described above, there is a need for curable silicone compositions that have excellent fine sealing or filling properties when the compositions are heated and melted, storage stability, and moldability thereof, and that provide sufficient curability even when containing fillers or pigments that shield high-energy radiation. In Patent Documents 5 to 7, the present applicants have proposed a hot-melt silicone composition (including film forms) with excellent curing properties, but there is still room for improvement, especially in flow properties and fine filling properties when heated and melted.

### RELATED ART DOCUMENTS

### PATENT DOCUMENTS

Patent Document 1: International Patent Application Publication WO 2016/136243
Patent Document 2: International Patent Application Publication WO 2019/078140
Patent Document 3: Japanese PCT Patent Application Publication 2017-512224
Patent Document 4: Japanese Unexamined Patent Application Publication 2017-101137
Patent Document 5: International Patent Application Publication WO 2021/200643
Patent Document 6: International Patent Application Publication WO 2020/203304
Patent Document 7: International Patent Application Publication WO 2021/132710

### SUMMARY OF THE INVENTION

### PROBLEM TO BE SOLVED BY THE INVENTION

An object of the present invention is to provide a hot-melt curable silicone composition that has low viscosity when heated and melted, excellent flow properties and fine filling properties, excellent curing properties and storage stability, and sufficient curability even when colored white, black, or the like, as required, as well as relatively hard cured products with low surface tack obtained by curing these compositions. Furthermore, the present invention provides a sheet or film containing the curable silicone composition, and particularly a sheet or film that does not have a void, is substantially flat, and has a film thickness of 10 to 1000 µm, as well as a releasable laminate body including the sheet or film containing the curable silicone composition. Furthermore, yet another object of the present invention is to provide: a member for a semiconductor device including a cured product of the curable silicone composition; a semiconductor device having the cured product; and a method of molding a cured product.

### MEANS FOR SOLVING THE PROBLEM

As a result of extensive studies, the present inventors discovered that the aforementioned problem can be solved by a curable silicone composition having hot-melt properties as a whole, containing: (A) an organopolysiloxane that is solid at 25°C, which contains an organopolysiloxane resin having a curing reactive functional group and an organopolysiloxane resin not having a curing reactive functional group at a specific ratio (20:80 to 90:10); (B) a straight-chain or branched organopolysiloxane having at least two curing reactive functional groups in a molecule, and that is liquid or has plasticity at 25°C; (C) an organohydrogenpolysiloxane; (D) organic particles containing a hydrosilylation reaction catalyst and having a structure where the hydrosilylation reaction catalyst is encapsulated in a thermoplastic resin with a glass transition temperature (Tg) in a range of 110 to 200°C; and (E) an inorganic filler within a specific quantitative range; optionally containing (F) a cure retarding agent for the hydrosilylation reaction with a boiling point of 200°C or higher. In the present invention, at least a portion of component (E) is preferably a white or colored inorganic filler.

The above curable silicone composition may be formed into a sheet or film with a thickness of 10 to 2000 µm, and the curable silicone composition sheet or film may be a peelable laminate body containing a separator, or a laminate body laminated on a portion of an electronic component or a substrate that is a precursor thereof. Furthermore, the present invention can also provide a cured product, applications thereof, and a laminate body or the like containing the cured product, by curing the aforementioned curable silicone composition by heating at or above the glass transition temperature (Tg) of the thermoplastic resin in order to express the catalytic activity of component (D).

### EFFECT OF THE INVENTION

The curable silicone composition of the present invention exhibits low viscosity and excellent heat-melting properties (hot-melt properties) with flow properties and fine filling properties. However, at temperatures at or below the glass transition temperature (Tg) of the thermoplastic resin constituting component (D), the hydrosilylation reaction is suppressed and excellent storage stability is exhibited, but at or above the melting point, immediate curing is possible, which provides excellent handling workability (including control of curing reaction) during overmold molding, or the like. Furthermore, the curable silicone composition has advantages of high thixotropy at temperatures exceeding 100°C, and no liquid dripping occurring even after performing thermocompression bonding on a substrate and then performing thermosetting in an oven or the like. Furthermore, the curable silicone composition of the present invention is heat curable, and thus there is not a negative effect on curing even when blended with large amounts of white or colored fillers or pigments. Therefore, white or colored cured products, as well as optical members and components made therefrom can be provided.

Furthermore, the curable silicone composition of the present invention forms a relatively hard cured product with little surface tack as a result of curing, and thus can be suitably used as a sealing agent for protecting a substrate. Furthermore, use is possible for double-sided adhesive applications where a relatively hard adhesive layer is required.

The curable silicone composition of the present invention can be manufactured simply by a simple mixing step, and therefore can be efficiently manufactured. Furthermore, the present invention can provide such a curable silicone composition in the form of a sheet or film with a thickness of 10 to 2000 µm without a void or the like, or in the form of a releasable laminate body containing such a curable silicone composition sheet or film as well as a release sheet or film. Furthermore, the sheet or film containing the curable silicone composition of the present invention or the releasable laminate body containing the sheet or film can be used after cutting to a desired size, if necessary, in a manufacturing process or the like of an electronic component such as a semiconductor device, and can be applied to an industrial production process such as batch sealing, batch adhering, and the like to a large-area substrate.

### BRIEF DESCRIPTION OF THE DRAWINGS

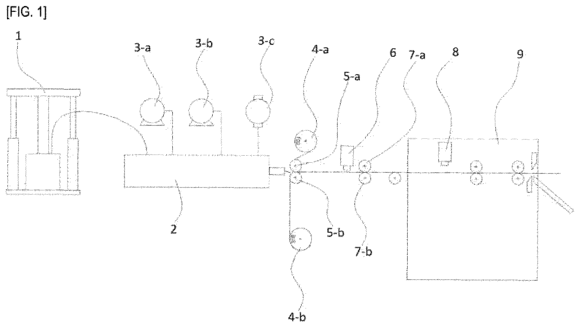

FIG. 1 is a diagram depicting the overall configuration of the manufacturing device (all parts, including sheet forming) of the curable silicone sheet used in the examples.

### DESCRIPTION OF THE PREFERRED EMBODIMENTS

Embodiments of the present invention will be described below in detail. The present invention is not limited by the following embodiments, and various types of modifications may be made within the scope of the gist of the present invention.

In the present invention, unless otherwise stated, "having hot-melt properties" means the softening point of a composition is between 50 and 200°C, and the composition has a melt viscosity at 150°C (preferably, melt viscosity of less than 1000 Pa-s) and has flowable properties. Therefore, in the present specification, the curable silicone composition having hot-melt properties of the present invention is also referred to as a curable hot-melt silicone composition.

In the present invention, atmospheric pressure refers to the atmospheric pressure in the environment where the curable silicone composition is handled in a laboratory, factory, or the like, and although not limited to a specific pressure, usually refers to an atmospheric pressure ranging from 1 atm (1013.25 hPa) to minus 100 hPa to plus 100 hPa, and particularly 1 atm (1013.25 hPa).

In the present specification, room temperature means the temperature of an environment where the curable silicone composition of the present invention is handled. Room temperature typically refers to 0°C to 40°C, particularly refers to 15 to 30°C, and more particularly refers to 18°C to 25°C.

### [Curable hot-melt Silicone Composition]

The curable hot-melt silicone composition of the present invention is a heat curable silicone composition that uses a hydrosilylation reaction, containing as main components:
(component (A)) a combination of
(A1) an organopolysiloxane resin having a mass loss ratio of 2.0 mass% or less when exposed for 1 hour at 200°C, containing a curing reactive functional group including a carbon-carbon double bond in the molecule, containing siloxane units (hereinafter referred to as "Q units") expressed by SiO_{4/2} accounting for 20 mol% or more of all siloxane units, that does not independently have hot-melt properties, and that is solid at 25°C, and
(A2) an organopolysiloxane resin having a mass loss ratio of 2.0 mass% or less when exposed for 1 hour at 200°C, not containing a curing reactive functional group including a carbon-carbon double bond in the molecule, containing Q units accounting for 20 mol% or more of all siloxane units, that does not independently have hot-melt properties, and that is solid at 25°C,
at a mass ratio of (A1):(A2) = 20:80 to 90:10, or 35:65 to 90:10, or 50:50 to 90:10; and
(component (B)) a straight or branched organopolysiloxane containing a carbon-carbon secondary bond, that is liquid or has plasticity at 25°C; and also containing:
   (component (C)) organohydrogenpolysiloxane as a crosslinking agent;
   (component (D)) fine particles containing a hydrosilylation reaction catalyst having a structure where the hydrosilylation reaction catalyst is encapsulated in a thermoplastic resin with a glass transition temperature (Tg) in a range of 110 to 200°C; and
   an inorganic filler in a range of 0.01 to 100 parts by mass with regard to a total of 100 parts by mass of components (A) to (D). In addition, in the curable hot-melt silicone composition of the present invention, a hydrosilylation reaction retarding agent, a so-called cure retarding agent, may be used by optional selection, but in that case, a cure retarding agent with a boiling point of 200°C or higher, in particular, a boiling point of 200°C or higher under one atmosphere of pressure (1013.25 hPa) is preferably used. Furthermore, the curable hot-melt silicone composition of the present invention may have other additives known in the art, added within a scope where the properties intended by the present invention can be maintained.

### [Hot-Melt Properties and Composition of Curable Silicone Compositions]

The curable silicone composition according to the present invention has hot-melt properties as a whole and can flow under heated conditions. In particular, the curable silicone composition of the present invention preferably has a softening point of 50°C or higher and melt viscosity at 150°C (preferably, a melt viscosity that is less than 200 Pa-s when measured using a Koka flow meter as described below). Note that in the present invention, only the composition as a whole needs to have hot-melt properties, and individual components forming the composition (Component (A) in particular) do not have hot-melt properties.

### [Component (A)]

The mass loss ratio of component (A) when exposed to 200°C for one hour must be 2.0 mass% or less in order to minimize the surface stickiness (surface tack) of the cured product obtained by curing the present composition and to suppress a change in the modulus of elasticity of the cured product at high temperature.

The curable silicone composition according to the present invention has, as component (A), a combination of an organopolysiloxane resin that is solid at 25°C, having a curing reactive functional group that contains a carbon-carbon double bond, containing Q units accounting for 20 mol% or more of all siloxane units, and not exhibiting hot-melt properties alone, and an organopolysiloxane resin that is a solid at 25°C, not having a curing reactive functional group that contains a carbon-carbon double bond, containing Q units accounting for 20 mol% or more of all siloxane units, and not exhibiting hot-melt properties alone, at a mass ratio of 20:80 to 90:10, 35:65 to 90:10, or 50:50 to 90:10. The organopolysiloxane resin may further contain a siloxane unit expressed by R₃SiO_{1/2}, R₂SiO_{2/2}, or RSiO_{3/2} (R represents a monovalent organic group, and particularly a monovalent hydrocarbon group with 1 to 10 carbon atoms), a hydroxyl group, or an alkoxy group expressed by R²O_{1/2} (R² represents a hydrogen atom or an alkyl group having 1 to 10 carbon atoms), but preferably includes Q units accounting for 20 mol% or more, preferably 40 mol% or more, and particularly preferably within a range of 40 to 90 mol% of all siloxane units. If the amount of Q units is less than 20 mol%, a technical effect of the present invention may not be achieved even if the organopolysiloxane resin contains a large amount of another branched siloxane unit (for example, RSiO_{3/2}), for example.

Such an organopolysiloxane resin (A) is an organopolysiloxane resin mixture containing:
(A1) an organopolysiloxane resin that is solid at 25°C, having a curing reactive functional group containing a carbon-carbon double bond in a molecule, containing at least 20 mol% or more of Q units of all siloxane units, and not independently having hot-melt properties; and
(A2) an organopolysiloxane resin that is solid at 25°C, not having a curing reactive functional group containing a carbon-carbon double bond in a molecule, containing at least 20 mol% or more of Q units of all siloxane units, and not independently having hot-melt properties,
at a mass ratio (component (A1): component (A2)) of 20:80 to 90:10, 35:65 to 90:10, or 50:50 to 90:10. Here, curing reactive refers to being capable of reacting with organohydrogensiloxane of component (C) by hydrosilylation reaction, thereby enabling the entire composition to be cured, and also refers to a curing reactive functional group containing a carbon-carbon double bond in the molecule, such as an alkenyl group, an acryloxy group, and the like.

Although component (A) described above does not have hot-melt properties alone, the composition of the present invention can have hot-melt properties by concomitant use of component (B) described later in a prescribed quantitative ratio range.

### [Organopolysiloxane Resin (A1) Having Curing Reactive Functional Group]

Component (A1) described above is one base compound of the present composition, and is an organopolysiloxane resin that contains Q units accounting for at least 20 mol% or more of all siloxane units, has no hot-melt properties alone, and has a curing reactive functional group containing a carbon-carbon double bond in a molecule.

Component (A1) must have a curing reactive group having a carbon-carbon double bond in a molecule. Such a curing reactive group is a hydrosilylation reactive functional group, which can form a cured product by a hydrosilylation cross-linking reaction with component (C). These curing reactive groups may be alkenyl groups, especially alkenyl groups with 2 to 10 carbons, such as vinyl groups and hexenyl groups.

Component (A1) is an organopolysiloxane resin that independently does not have hot-melt properties and is solid in a solvent-free state. Herein, the absence of hot-melt properties means that the organopolysiloxane resin, which is component (A1), does not exhibit heating and melting behavior independently at 200°C or lower, and specifically means that the component does not have a softening point or melt viscosity at a temperature of 200°C or lower. In order to exhibit such properties, the component (A1) has a functional group in the organopolysiloxane resin that is a functional group selected from monovalent hydrocarbon groups with 1 to 10 carbon atoms, and particularly methyl groups and other alkyl groups with 1 to 10 carbon atoms, and does not substantially contain a phenyl group or other aryl group. For example, the ratio of aryl groups in all organic groups bonded to silicon atoms is 5 mol% or less, or 2 mol% or less, but preferably no aryl groups are included at all. If component (A1) contains a large amount of aryl groups such as a phenyl group as an organic group, the component may independently be hot-meltable, and the effect of reinforcing a cured product derived from Q units may be reduced.

Preferably, the functional group bonded to a silicon atom in the organopolysiloxane resin of component (A1) is a group selected from methyl groups or alkenyl groups such as a vinyl group. 70 to 99 mol% of all organic groups bonded to silicon atoms may be methyl groups. Other organic groups bonded to a silicon atom may be an alkenyl group such as a vinyl group. In such a range, component (A1) is not hot-meltable alone, but is useful as a component that is particularly excellent in coloring resistance and the like at the high temperatures of a cured product obtained from the curable silicone composition of the present invention. Note that the organopolysiloxane resin of component (A1) may contain a small amount of a hydroxyl group or alkoxy group.

Component (A1) is a solid organopolysiloxane resin in a solvent-free state, and preferably, component (A1) is (A1-1) an organopolysiloxane resin that is a solid at 25°C, not having hot-melt properties alone, expressed by the following average unit formula:

(R¹₃SiO_{1/2})ₐ(R¹₂SiO_{2/2})_{b}(R¹SiO_{3/2})_{c}(SiO_{4/2})_{d}(R²O_{1/2})ₑ

(where each R¹ independently represents a monovalent hydrocarbon group with 1 to 10 carbon atoms, but 1 to 12 mol% of all R¹s in a molecule represents an alkenyl group; each R² represents a hydrogen atom or an alkyl group with 1 to 10 carbon atoms; and a, b, c, d, and e represent numbers that satisfy 0.10 ≤ a ≤ 0.60, 0 ≤ b ≤ 0.70, 0 ≤ c ≤ 0.80, 0.20 ≤ d ≤ 0.65, and 0 ≤ e ≤ 0.05, but 0.20 ≤ c + d and a + b + c + d = 1).

In the aforementioned average unit formula, each R¹ independently represents a monovalent hydrocarbon group having 1 to 10 carbon atoms. Examples include methyl groups and other alkyl groups; vinyl groups and other alkenyl groups; and phenyl groups and other aryl groups. Furthermore, 1 to 12 mol% of all R¹s in one molecule is an alkenyl group, and 2 to 10 mol% of all R¹s in one molecule are alkenyl groups, and particularly preferably a vinyl group. If the alkenyl group content is less than the lower limit of the range described above, the mechanical strength (hardness and the like) of the resulting cured product may be insufficient. On the other hand, if the amount of the alkenyl group is at or below the upper limit of the range described above, the composition containing the component can achieve favorable hot-melt performance as an entire composition.

In the formula above, R² is an alkyl group having a hydrogen atom or 1 to 10 carbon atoms. Examples of alkyl groups in R² include methyl groups. The group R²O_{1/2} containing the R² corresponds to a hydroxyl group or alkoxy group of the organopolysiloxane resin of component (A).

In the formula, "a" is a number indicating the percentage of siloxane units in the general formula: R¹₃SiO_{1/2}. "a" satisfies 0.1 ≤ a ≤ 0.60, and satisfies 0.15 ≤ a ≤ 0.55. If "a" is at or above the lower limit of the aforementioned range, the composition containing the component can achieve favorable hot-melt performance as a whole composition. On the other hand, if "a" is less than or equal to the upper limit of the aforementioned range, the mechanical strength (hardness, elongation rate, and the like) of the cured product obtained by curing the curable silicone composition of the present invention is not too low.

In the formula, "b" is a number indicating the percentage of siloxane units in the general formula: R¹₂SiO_{2/2}. "b" is a value that satisfies 0 ≤ b ≤ 0.70, and satisfies 0 ≤ b ≤ 0.60. If "b" is less than or equal to the upper limit of the aforementioned range, the composition containing the component can achieve favorable hot-melt performance as a whole composition and a composition with little stickiness at room temperature can be obtained.

In the formula, "c" is a number indicating the percentage of siloxane units in the general formula: R³SiO_{3/2}. "c" is a value that satisfies 0 ≤ c ≤ 0.80, and satisfies 0 ≤ c ≤ 0.75. If "c" is less than or equal to the upper limit of the aforementioned range, the composition containing the component can achieve favorable hot-melt performance as a whole composition and a low-tack or tackfree composition with little stickiness at room temperature can be obtained. In the present invention, c may be and is preferred to be 0.

In the above formula, d is a number indicating the ratio of Q units, and may be such that 0.20 ≤ d ≤ 0.65, or 0.25 ≤ d ≤ 0.65. If "d" is within the aforementioned numerical value range, the composition containing this component can achieve favorable hot-melt performance as a whole composition, and a cured product obtained by curing the composition can be relatively hard and have sufficient flexibility for practical use.

In the formula above, "e" is a number indicating the percentage of units in the general formula: R²O_{1/2}, where the units are a hydroxyl group or alkoxy group bonded to a silicon atom that can be included in the organopolysiloxane resin. "e" satisfies the equation 0 ≤ e ≤ 0.05, and preferably satisfies 0 ≤ e ≤ 0.03. If "e" is below the upper limit of the range, a material that achieves favorable hot-melt performance as an entire composition can be obtained. Note that in the formula above, the sum of "a", "b", "c", and "d", which is the sum of each siloxane unit, is equal to 1.

Component (A1) is an organopolysiloxane resin having the aforementioned properties, and is a solid at room temperature, so in order to physically blend with component (B) described below, component (A1) may be used in a state dissolved in a solvent or solvent mixture selected from the group consisting of: toluene, xylene, mesitylene, and other aromatic hydrocarbons; tetrahydrofuran, dipropyl ether, and other ethers; hexamethyldisiloxane, octamethyltrisiloxane, decamethyltetrasiloxane, and other silicones; ethyl acetate, butyl acetate, propylene glycol monomethyl ether acetate, and other esters; acetone, methyl ethyl ketone, methyl isobutyl ketone, and other ketones; and the like. The solvent used herein can be efficiently removed in a process described later.

### [Component (A2)]

Component (A2) is one base compound of the present composition, is an organopolysiloxane resin that is solid at 25°C, not having hot-melt properties alone and not containing a curing reactive functional group, and is a component for achieving hot-melt properties of the curable silicone composition as a whole and excellent stress relaxation properties of a cured product obtained by curing the curable silicone composition through use in combination with component (A1) and component (B) described above within a prescribed quantitative range.

Component (A2) is an organopolysiloxane resin that independently does not have hot-melt properties and is solid in a solvent-free state. The behavior of component (A2) not having hot-melt properties and the absence of an aryl group, such as a phenyl group, is similar to that of component (A1).

Component (A2) is an organopolysiloxane resin which, similar to component (A1), is a solid at 25°C and contains Q units accounting for 20 mol% or more of all siloxane units, but does not have a curing reactive functional group containing at least one carbon-carbon double bond in a molecule. In other words, component (A2) does not contain an alkenyl group such as a vinyl group or the like as a functional group in the organopolysiloxane resin. Examples of groups provided by the organopolysiloxane resin of component (A2) include monovalent hydrocarbon groups with 1 to 10 carbon atoms, and particularly methyl groups and other alkyl groups with 1 to 10 carbon atoms. The organopolysiloxane resin must be substantially free of phenyl groups or other aryl groups. For example, the ratio of aryl groups of all organic groups bonded to a silicon atom is 5 mol% or less, or 2 mol% or less, and preferably no aryl groups are included at all.

Preferably, the functional group bonded to the silicon atom in component (A2) is an alkyl group having 1 to 10 carbon atoms, such as a methyl group, and 70 to 100 mol% of all organic groups bonded to a silicon atom may be methyl groups. Within this range, component (A2) can be a component that does not individually exhibit hot-melt properties, and that is particularly effective in reinforcing a cured product containing siloxane units expressed by SiO_{4/2}. Note that the organopolysiloxane resin of component (A2) may contain a small amount of a hydroxyl group or alkoxy group.

Component (A2) does not have a curing reactive functional group having a carbon-carbon double bond in a molecule, and thus independently does not form a cured product when combined with organohydrogenpolysiloxane, which is component (C), but improves the hot-melt properties of the curable silicone composition of the present invention and has a reinforcing effect with regard to cured product obtained by curing the curable silicone composition. Furthermore, the hot-melt properties of the resulting curable silicone composition and the physical properties of the composition after curing can be adjusted, if necessary, by using component (A1) having a curing reactive functional group.

Component (A2) is an organopolysiloxane resin that is solid at 25°C in a solvent-free state, and 20 mol% or more of all siloxane units in each molecule are Q units which are branched siloxane units. Preferably, the ratio of Q units to all of the organopolysiloxane of component (A2) is 40 mol% or more, or 50% or more, and particularly within a range of 50 to 65 mol%.

Preferably, the component (A2) is (A2-1) an organopolysiloxane resin that does not have hot-melt properties alone, expressed by the following average unit formula:

(R³₃SiO_{1/2})_{f}(R³₂SiO_{2/2})_{g}(R³SiO_{3/2})ₕ(SiO_{4/2})ᵢ(R²O_{1/2})ⱼ

(where each R³ independently represents a monovalent hydrocarbon group with 1 to 10 carbon atoms and that does not contain a carbon-carbon double bond; R² represents a hydrogen atom or an alkyl group with 1 to 10 carbon atoms; and f, g, h, i, and j represents numbers that satisfy 0.35 ≤ f ≤ 0.55, 0 ≤ g ≤ 0.20, 0 ≤ h ≤ 0.20, 0.45 ≤ i ≤ 0.65, 0 ≤ j ≤ 0.05, and f + g + h + i = 1).

In the average unit formula above, each R³ independently represents a monovalent hydrocarbon group having 1 to 10 carbon atoms and containing no carbon-carbon double bond. Examples includes groups selected from a group consisting of methyl groups and other alkyl groups; phenyl groups and other aryl groups; and benzyl groups and other aralkyl groups. Herein, it is particularly preferred from the perspective of industrial production and the technical effect of the invention that 70 mol% or more of the total R³ in one molecule is a methyl group or other alkyl group with 1 to 10 carbon atoms, and particularly a methyl group. On the other hand, R³ is preferably substantially free of phenyl groups and other aryl groups. If a large amount of phenyl groups or other aryl groups are included, component (A2) itself may have hot-melt properties, the technical effect of the present invention may not be achieved, and the coloring resistance under high temperatures of a cured product obtained by curing the curable silicone composition of the present invention may deteriorate.

In the formula above, R² is as described above, but when R² represents an alkyl group, an example of the alkyl group is a methyl group.

In the formula, "f" is a number indicating the percentage of siloxane units of the general formula: R³₃SiO_{1/2}. f is a value that satisfies 0.35 ≤ f ≤ 0.55, or 0.40 ≤ f ≤ 0.50. If "f" is at or above the lower limit of the aforementioned range, the curable silicone composition containing the component can achieve favorable hot-melt performance as a whole composition. On the other hand, if "f" is less than or equal to the upper limit of the aforementioned range, the mechanical strength (hardness, and the like) of the cured product obtained is not too low.

In the formula, "g" is a number indicating the percentage of siloxane units in the general formula: R¹₂SiO_{2/2}. g is a value that satisfies 0 ≤ g ≤ 0.20, or 0 ≤ g ≤ 0.10. If "g" is less than or equal to the upper limit of the range, the curable silicone composition containing the component can achieve favorable hot-melt performance as a whole composition and a composition with little stickiness at room temperature can be obtained. In the present invention, g may be 0.

In the formula, "h" is a number indicating the percentage of siloxane units in the general formula: R¹SiO_{3/2}. h is a value that satisfies 0 ≤ h ≤ 0.20, or 0 ≤ h ≤ 0.10. If "h" is less than or equal to the upper limit of the range, the curable silicone composition containing the component can achieve favorable hot-melt performance as a whole composition and a composition with little stickiness at room temperature can be obtained. In the present invention, h may be 0.

In the above formula, i is a number indicating the ratio of Q units, and should satisfy 0.45 ≤ i ≤ 0.65, or 0.505 ≤ i ≤ 0.65. When "i" is within the numerical value range, the curable silicone composition containing this component can achieve favorable hot-melt performance as a whole composition, and thus a composition can be achieved, which has excellent mechanical strength of a cured product obtained by curing the curable silicone composition, has no stickiness as a whole composition, and has favorable handling workability.

In the formula above, "j" is a number indicating the percentage of units of the general formula: R²O_{1/2}, where the units are a hydroxyl group or alkoxy group bonded to a silicon atom that can be included in the organopolysiloxane resin. "j" is a value that satisfies 0 ≤ j ≤ 0.05, or 0 ≤ j ≤ 0.03. If "j" is at or below the upper limit of the aforementioned range, the curable silicone composition as a whole can achieve a favorable hot-melt performance. Note that in the formula above, the sum of "f", "g", "h", and "i", which is the sum of each siloxane unit, is equal to 1.

Component (A2) is an organopolysiloxane resin having the aforementioned characteristics, and is similar to the aforementioned component (A1) in terms of handling properties. In other words, component (A2) is solid at room temperature (for example, 25°C), and thus, like component (A1), can be used dissolved in the solvent or solvent mixture described above in order to mix with component (B). Thereafter, the solvent can be removed to prepare a curable silicone composition.

### [Removal of Volatile Low Molecular Weight Components in Component (A)]

For component (A1) and the component (A2), volatile low molecular weight components are produced in each production process. Specifically, the volatile low molecular weight components appear as byproducts from polymerizing the organopolysiloxane resin that has a M₄Q structure containing an M unit (R³₃SiO_{1/2}) and a Q unit (SiO_{4/2}). This structure has an effect of significantly reducing the hardness of the cured product obtained by the curable silicone composition of the present invention. The organopolysiloxane resin of component (A1) and component (A2) is produced by polymerizing the raw material monomers in the presence of an organic solvent that is highly compatible with these components, and removing the organic solvent by drying under reduced pressure, or the like, to obtain a solid organopolysiloxane resin. However, the M₄Q structure has high solubility with the organopolysiloxane resin, and is not easily removed by the drying conditions that remove the organic solvent. It is known that the M₄Q structure can be removed by exposing the organopolysiloxane resin containing these structures to a high temperature of 200°C or higher for a short period of time, but if a curable silicone composition containing the M₄Q structure is molded together with a substrate of a semiconductor or the like, and then exposed to a high temperature to remove the M₄Q structure, the volume of the cured product resulting from the curable silicone composition may decrease and the hardness of the cured product may significantly increase, resulting in changes in dimension, warping, and the like of the molded product. Furthermore, the M₄Q structure also has the effect of imparting adhesiveness to the resulting cured material, essentially increasing the surface tackiness of the cured material. If the intended use of the cured product is as an encapsulant to protect the substrate, especially one side protection, the surface tackiness may need to be reduced as much as possible, and the presence of M₄Q structures can be problematic. Furthermore, if a large amount of M₄Q structure remains in the composition or cured product, a marked increase in hardness may also occur in the adhesive layer or sealing layer for double-sided adhesion, and the elastic modulus may change significantly. Therefore, in order to apply the curable silicone compositions of the present invention to applications laminated with a substrate of a semiconductor or the like, the M₄Q structure is preferably removed from the organopolysiloxane resin at the point of a raw material prior to a molding process of curing with the curable silicone composition by laminating with a substrate, and, if possible, prior to preparing the curable silicone composition.

Examples of methods of removing the M₄Q structure from the organopolysiloxane resin include methods of obtaining a particulate organopolysiloxane resin in a manufacturing process of the organopolysiloxane resin, which is then dried in an oven or the like to remove the M₄Q structure, methods of removing the structure along with the aforementioned organic solvent in a twin-screw kneader described later, and the like.

More specifically, component (A1) and component (A2) are produced in the presence of organic solvents, and volatile components such as M₄Q structures occur as by-products during the production process. The volatile components can be removed by briefly treating the organopolysiloxane resin, which is the obtained coarse raw material, at a high temperature of approximately 200°C, so the organic solvent and volatile components such as the M₄Q structures and the like can simultaneously be removed from component (A1) and component (A2) using a biaxial mixer set to a temperature of 200°C or higher. From the perspective of efficiently producing the curable hot-melt silicone composition of the present invention, a step is preferably performed of adding component (B), described later, to component (A2) or a mixture of component (A1) and component (A2) dissolved in an organic solvent, feeding the mixture in a liquid state into a twin-screw extruder set at 200°C or higher, and then removing the M₄Q structure or other volatile components together with the organic solvent. This method enables obtaining a mixture of component (A) and component (B) having hot-melt properties, which can be used for kneading in the remaining components included in the curable silicone composition in a process described later.

### [Mass Ratio of Component (A1) and Component (A2) in Component (A)]

In order for the present composition as a whole to have hot-melt properties, component (A2) or a mixture of component (A1) and component (A2) must be mixed together with component (B), described below, at a prescribed ratio. The ratio of component (A1) and component (A2) may be within a range of 20:80 to 90:10, a range of 35:65 to 90:10, or a range of 50:50 to 90:10. Component (A2) itself does not have curing properties due to not having a curing reactive functional group. However, by using component (A2) in combination with component (A1) in the present composition, it is possible to adjust to a certain degree the storage elastic modulus, loss elastic modulus, and tanδ calculated from the ratio therefrom, thereby achieving an elastic modulus, flexibility, and stress relaxation properties that are suitable for a cured product. Furthermore, a curable hot-melt silicone composition with desired properties in the present invention can be prepared by combining component (A2) with component (B) without component (A1).

### (Component (B))

Component (B) is one main component of the present curable silicone composition, is a straight-chain or branched-chain organopolysiloxane, is liquid or has plasticity at 25°C, and has at least two curing reactive functional groups containing carbon-carbon double bonds in each molecule. Such a curing reactive chain organopolysiloxane, when mixed with the solid organopolysiloxane resin of component (A) described above, can exhibit hot-melt properties as an entire composition.

Component (B) must have a curing reactive functional group having a carbon-carbon double bond in a molecule. Such a curing reactive functional group is hydrosilylation reactive, and forms a cured product by a crosslinking reaction with another component. This curing reactive functional group can be an alkenyl group similar to that of component (A1), and in particularly, can be a vinyl group or hexenyl group.

Component (B) is a straight-chain or branched-chain organopolysiloxane that is liquid or has plasticity at 25°C (room temperature), and when mixed with component (A) in a solid state at room temperature, the composition as a whole can exhibit hot-melt properties. A chemical structure of the organopolysiloxane of component (B) may be a straight chain organopolysiloxane, or a branched-chain organopolysiloxane having a small number of branched siloxane units (for example, a T unit expressed by general formula: R⁴SiO_{3/2} (where R⁴ independently represents a monovalent hydrocarbon group with 1 to 10 carbon atoms) or a Q unit expressed by SiO_{4/2}), but is preferably
the following structural formula (B1):

R⁴₃SiO(SiR⁴₂O)ₖSiR⁴₃

(where each R⁴ independently represents a monovalent hydrocarbon group with 1 to 10 carbon atoms, but at least two of the R⁴s in one molecule represents an alkenyl group, and k represents a number from 20 to 5,000).

A straight-chain diorganopolysiloxane having an alkenyl group, and particularly preferably a vinyl group at both ends of a molecular chain is preferred.

In the formula, each R⁴ independently represents a monovalent hydrocarbon group having 1 to 10 carbon atoms. Examples include groups selected from a group consisting of: methyl groups and other alkyl groups; vinyl groups and other alkenyl groups; phenyl groups and other aryl groups; and benzyl groups and other aralkyl groups. Furthermore, at least two of the R⁴ in each molecule are alkenyl groups, such as a vinyl group. Furthermore, each R⁴ can be a functional group selected from a group consisting of methyl groups and other alkyl groups with 1 to 10 carbon atoms and vinyl groups, hexenyl groups and other alkenyl groups, and of all R⁴s, at least two in each molecule can be alkenyl groups, and the remaining R⁴ can be methyl groups. Note that from the viewpoint of a technical effect of the invention, R⁴ is preferably substantially free of an aryl group such as a phenyl group or the like. If a large amount of phenyl groups or other aryl groups are included, the coloring resistance at high temperatures of the cured product obtained from the curable silicone composition may deteriorate. Particularly preferably, a vinyl group or other alkenyl group is provided at each end of the molecular chain, with the remainder of R⁴ being methyl groups.

In the above formula, "k" is a number between 20 and 5,000, 30 and 3,000, or 45 and 800. If "k" is at or above the lower limit of the aforementioned range, a curable silicone composition having little stickiness at room temperature can be obtained. On the other hand, if "k" is at or below the upper limit of the aforementioned range, the curable silicone composition as a whole can achieve a favorable hot-melt performance.

Herein, in order for the whole composition to exhibit hot-melt properties, the amount of component (B), which is a straight-chain or branched organopolysiloxane, can be within a range of 10 to 100 parts by mass, or within a range of 10 to 70 parts by mass, or within a range of 15 to 50 parts by mass, relative to 100 parts by mass of component (A), which is an organopolysiloxane resin. If the amount of component (B) is within the aforementioned range, the resulting curable silicone composition exhibits favorable hot-melt properties, the mechanical strength of a cured product obtained by curing the curable silicone composition can be increased, and the stickiness of the resulting cured silicone composition at room temperature can be reduced, thereby improving the handling workability of the composition.

### (Component (C))

Component (C) is an organohydrogenpolysiloxane having at least two silicon atom-bonded hydrogen atoms in one molecule that can be cross-linked with the carbon-carbon double bond in component (A) and component (B) above in the presence of a hydrosilylation reaction catalyst, and is a component that cures the composition.

The structure of the crosslinking agent, organohydrogenpolysiloxane, is not particularly limited and may be linear, branched-chain, cyclic, or resinous. In other words, component (c) may be an organohydrogenpolysiloxane having a hydrogen organosiloxy unit expressed by HR₂SiO_{1/2} (M^{H} unit, where R independently represents a monovalent organic group), or a hydrogen organosiloxy unit expressed by HRSiO_{2/2} (D^{H} unit, where R independently represents a monovalent organic group).

On the other hand, when the curable silicone composition is used in a molding process, since the amount of the curing reactive functional group containing a carbon-carbon double bond in the present composition is small, from the perspective of curing rate, moldability, and curing curability thereof, the organohydrogenpolysiloxane is an organohydrogen polysiloxane resin containing a monoorganosiloxy unit expressed by RSIO_{3/2} (T unit, where R represents a monovalent organic group or a silicon atom-bonded hydrogen atom) or a branched unit of a siloxy unit (Q unit) expressed by SiO_{4/2}, having at least two hydrogen diorganosiloxy units expressed by HR₂SiO_{1/2} (M^{H} unit, where R independently represents a monovalent organic group) in a molecule, and having the M^{H} unit at a molecular terminal.

A particularly preferred organohydrogenpolysiloxane is an organohydrogenpolysiloxane expressed by the following average composition formula (1):

(R⁴₃SiO_{1/2})ₐ(R⁵₂SiO_{2/2})_{b}(R⁵SiO_{3/2})_{c}(SiO_{4/2})_{d}(R²O_{1/2)e} (1)

(Where R⁴ independently represents an unsubstituted or substituted monovalent hydrocarbon group that does not contain a hydrogen atom or an aliphatic unsaturated bond with 1 to 12 carbon atoms, R⁵ independently represents an unsubstituted or substituted monovalent hydrocarbon group containing an aliphatic unsaturated bond with 1 to 12 carbon atoms, at least two of all R⁴s represent hydrogen atoms, and a, b, c, and d represents numbers that satisfy conditions of 0.01 ≤ a ≤ 0.6, 0 ≤ b, 0 ≤ c ≤ 0.9, 0 ≤ d ≤ 0.9, and a + b + c + d = 1 and c + d ≥ 0.2).

Note that the organohydrogenpolysiloxane may optionally have a mass loss ratio relative to pre-exposure of 10% or less after exposure to 100°C for 1 hour under atmospheric pressure.

In the formula above, each R⁴ represent the same or different hydrogen atom or monovalent hydrocarbon group with 1 to 12 carbon atoms without an aliphatic unsaturated carbon bond. However, at least two, and preferably at least three R⁴s in one molecule are hydrogen atoms. The monovalent hydrocarbon group corresponding to R⁴ excluding hydrogen atoms includes, for example: methyl groups and other alkyl groups; phenyl groups and other aryl groups; benzyl groups and other aralkyl groups; other halogenated alkyl groups; and the like. From an industrial standpoint, the monovalent hydrocarbon group expressed by R⁴ can independently be a methyl group or a phenyl group.

In the formula, R⁵ represents a monovalent hydrocarbon group with 1 to 12 carbon atoms without an aliphatic unsaturated carbon bond, and examples include the same groups as the monovalent hydrocarbon group of R⁴ described above. R⁵ can be a group selected from methyl groups and phenyl groups.

In the formula, "a", "b", "c", and "d" are numbers satisfying the following conditions: 0.01 ≤ a ≤ 0.6; 0 ≤ b; 0 ≤ c ≤ 0.9; 0 ≤ d ≤ 0.9; a + b + c + d = 1; and c + d ≥ 0.2. Specific examples include M^{H}MT resins, M^{H}T resins, M^{H}MTQ resins, M^{H}MQ resins, M^{H}DQ resin, M^{H}Q resins, and the like. In the notation of the resin above, M, D, T, and Q represent a M unit, D unit, T unit, and Q unit, respectively, and M^{H} represents an M unit with a hydrogen atom.

In the formula (1) above, R² is an alkyl group having a hydrogen atom or 1 to 10 carbon atoms. Examples of alkyl groups in R² include methyl groups and the like. The group R²O_{1/2} containing the R² corresponds to a hydroxyl group or alkoxy group of the organohydrogenpolysiloxane of component (C).

In the formula above, "e" is a number indicating the percentage of units in the general formula: R²O_{1/2}, where the units are a hydroxyl group or alkoxy group bonded to a silicon atom that can be contained in the organopolysiloxane resin, e is a value that satisfies 0 ≤ e ≤ 0.05 and 0 ≤ e ≤ 0.03. Note that in the formula (1) above as described above, the sum of "a", "b", "c" and "d", which is the sum of each siloxane unit, is equal to 1.

Examples of Component (C) include organohydrogenpolysiloxanes expressed by the following average compositional formula (2).

(HR⁶₂SiO_{1/2})_{f}(R⁶₂SiO_{2/2})_{g}(SiO_{4/2})ₕ (2)

In formula (2), R⁶ independently represents an unsubstituted or substituted monovalent hydrocarbon group that does not contain an aliphatic unsaturated bond with 1 to 12 carbon atoms, and f, g, and h are values that satisfy the conditions of 0.01 ≤ f ≤ 0.6, 0 ≤ g ≤ 0.9, 0.2 ≤ h ≤ 0.9, and f + g + h = 1. Specific examples of the monovalent hydrocarbon group include the same as those indicated as specific examples of the monovalent hydrocarbon group expressed by R⁴ in average compositional formula (1) above. R⁶ can independently be a group selected from methyl groups and phenyl groups.

Furthermore, examples of component (C) include organohydrogenpolysiloxanes expressed by the following average formula (3).

(HR⁷₂SiO_{1/2})ᵢ(R⁷₂SiO_{2/2})ⱼ(R⁸SiO_{3/2})ₖ (3)

In formula (3), R⁷ and R⁸ each independently represent an unsubstituted or substituted monovalent hydrocarbon group that does not contain an aliphatic unsaturated bond with 1 to 12 carbon atoms, 10 mol% or more of all R⁸s represent aryl groups, and i, j, and k represent values that satisfy the conditions of 0.01 ≤ i ≤ 0.6, 0 ≤ j ≤ 0.9, 0.2 ≤ k ≤ 0.9, and i + j + k = 1.

Specific examples of the monovalent hydrocarbon group include the same as those indicated as specific examples of the monovalent hydrocarbon group expressed by R⁴ in average compositional formula (1) above. R⁸ can independently represent a group selected from methyl groups and phenyl groups, provided that 10 mol% or more of all R⁸ are phenyl groups.

The organohydrogenpolysiloxane expressed by the average compositional formula (2) above and the organohydrogenpolysiloxane expressed by the average compositional formula (3) may be used independently or in combination.

The amount of the organohydrogenpolysiloxane of component (C) in the curable silicone composition of the present invention is an amount sufficient to cure the curable silicone composition. The amount of hydrogen atoms bonded to a silicon atom in the organohydrogenpolysiloxane of component (C) is an amount where the number of silicon atom-bonded hydrogen atoms per alkenyl group for alkenyl groups bonded to silicon atoms included in the entire curable silicone composition is 0.5 to 20.0, and particularly within a range of 1.0 to 10, with regard to the curing reactive functional groups (such as vinyl groups or other alkenyl groups) containing a carbon-carbon double bond in component (A) and component (B) (hereinafter referred to as "SiH/Vi ratio").

### [Removal of volatile components]

On the other hand, whatever the structure of these organohydrogenpolysiloxanes, the component preferably does not readily volatilize at approximately 100°C under atmospheric pressure, particularly at 1 atm (1013.25 hPa). This is because, in the production process of the curable hot-melt silicone sheet or film of the present invention described below, in order to obtain a sheet or film that does not contain a void or the like, it is necessary to melt and mix each component of the curable silicone composition and the composition obtained therefrom in a temperature range of 50 to 150°C under reduced pressure. Thus, a sheet or film that does not contain a void or the like can be manufactured by using each component of the present invention. Although each component is exposed to a prescribed temperature under reduced pressure for a very short period of time, if a large amount of active component volatilizes under these mixing conditions, there is a problem where a composition with the designed properties cannot be obtained. In particular, the amount of organohydrogenpolysiloxane added as a crosslinking agent is small relative to the total mass of the curable silicone composition. Therefore, volatilization of these components can significantly change the properties of the composition (curing properties, physical properties of the cured product, and the like) from an intended value. Therefore, component (C) must not be readily volatile, and specifically, the mass loss ratio with regard to before exposure after exposure to 100°C for one hour under atmospheric pressure is 10 mass% or less, which is preferable depending on the application.

### [Component (D)]

Component (D) is one of the characteristic components of the curable silicone composition of the present invention, and is fine particles containing a hydrosilylation reaction catalyst having a structure where the hydrosilylation reaction catalyst is encapsulated in a thermoplastic resin with a glass transition temperature (Tg) in a range of 110 to 200°C. Component (D) can have a structure with either (D-1) fine particles in which the hydrosilylation reaction catalyst is dissolved or dispersed in the thermoplastic resin, or (D-2) microcapsule fine particles with a structure where the hydrosilylation reaction catalyst is included as a core in a thermoplastic resin shell. Component (D) has a structure in which the hydrosilylation reaction catalyst is encapsulated or supported in a thermoplastic resin having a specific glass transition temperature, so the hydrosilylation reaction catalyst remains inactive and the curing reaction is suppressed even when heated to a temperature below the glass transition temperature, and thus the composition can be stably stored even when formed into a sheet or the like at a temperature below that temperature. On the other hand, heating at a temperature exceeding the glass transition temperature quickly melts the thermoplastic resin in component (D), in order to activate the hydrosilylation reaction catalyst to form the cured product.

Examples of catalysts in component (D) include platinum-based catalysts, rhodium-based catalysts, palladium-based catalysts, and other nonplatinum metal catalysts based on iron, ruthenium, iron/cobalt and the like, but platinum-based catalysts are particularly exemplified because they can significantly promote curing of the present composition. The platinum-based catalyst can be appropriately selected from well-known catalysts, but is represented by a platinum (0-valence)-alkenylsiloxane complex. The structure of the alkenylsiloxane is not limited, but 1,3-divinyl-1,1,3,3-tetramethyldisiloxane is exemplary because of the favorable stability of the complex.

The thermoplastic resin forming component (D) is a component that functions as a wall material to isolate the above catalyst from the reaction system, and the glass transition temperature (Tg) is exemplified to be in the range of 110°C to 200°C, and may be in the range of 120 to 200°C, or 130 to 200°C. Furthermore, the glass transition temperature of the thermoplastic resin can be measured by a DSC (differential scanning calorimeter). The thermoplastic resin may be selected from epoxy resins, acrylic resins, and polycarbonate resins, especially acrylic resins or polycarbonate resins with the aforementioned Tg. Note that the thermoplastic resin and the fine particles that are component (D) exhibit almost the same behavior, even if the softening point is within the aforementioned range.

In the present invention, if the Tg of the thermoplastic resin constituting component (D) is lower than the aforementioned lower limit, the thermoplastic resin, which is the wall material, may dissolve and the hydrosilylation reaction catalyst may elute in the process of uniform mixing or heat molding the composition, and the storage stability of the entire composition may be compromised. On the other hand, if the Tg of the thermoplastic resin exceeds the aforementioned upper limit, the substrate may deteriorate and be unfavorable in the thermal process, because high temperatures exceeding 200°C will be required for reaction activity.

The average particle size of the fine particles of component (d) may be in a range of 0.1 to 500 µm, and may be in a range of 0.3 to 100 µm. This is because preparing fine particles with an average particle size that is less than the lower limit of the range above is difficult. On the other hand, dispersibility in the curable silicone resin composition is reduced if the average particle size exceeds the upper limit of the range above.

The method for preparing component (D) is not limited, and examples include conventionally known chemical methods such as interfacial polymerization, in-situ polymerization, and the like, and physical and mechanical methods such as coacervation, drying in liquid, and the like. The drying in liquid method and vapor phase drying method are particularly desirable because obtaining microcapsule fine particles with a narrow particle size distribution is relatively easy. The fine particles obtained by these methods can be used as is, but preferably the fine particles are washed with a well-known cleaning solvent such as methanol or a lower siloxane to remove the platinum-based catalyst attached to the surface, in order to obtain a curable silicone resin composition with excellent storage stability.

In this composition, the amount of platinum-based catalyst-containing thermoplastic resin fine particles is not particularly limited, but may be an amount that results in 0.1 to 2,000 mass ppm, or 1 to 1,000 ppm of platinum metal in the fine particles. This is because when the amount of the thermoplastic resin fine particles containing the platinum-based catalyst is below the lower limit of the aforementioned range, there is a tendency for the particles to not thoroughly cure, but on the other hand, if the upper limit of the aforementioned range is exceeded, curing will not be notably improved.

### (Component (E))

(E) Component (E) is a filler or pigment, which in the present invention preferably includes a white or colored filler, especially a white or colored inorganic filler, a portion of which may be wavelength converting components such as phosphors, and may also include fine particles with other functions such as conductivity, thermal conductivity, and the like. In particular, since the composition of the present invention is heat curable in addition to having hot-melting properties, there is an advantage that the curing reactivity is not impeded even if white or colored fillers or pigments that shield or reflect high energy beams such as ultraviolet rays are used.

The function of the filler or pigment which is component (E) is not particularly limited, but can be expected to make the resulting cured product white or colored, as well as improve the mechanical strength and hardness, and may provide optical functions such as wavelength conversion or the like, or thermal and electrical conductivity. White pigments, black pigments, phosphors, metallic powders and other functional fillers are examples of component (E), and those that are components that provide white or colored cured products are particularly preferable. Note that the shape of the filler or pigment which are component (E) is not particularly limited, and may be spherical, spindle-shaped, flat, needle-shaped, amorphous, or the like.

The white pigment is a component that imparts whiteness to the cured product and improves light reflectivity, and the cured product resulting from curing the composition by blending the component can be used as a light reflective material for light emitting/optical devices. Examples of the white pigment include metal oxides such as titanium oxide, aluminum oxide, zinc oxide, zirconium oxide, magnesium oxide, and the like; hollow fillers such as glass balloons, glass beads, and the like; and additionally, barium sulfate, zinc sulfate, barium titanate, aluminum nitride, boron nitride, and antimony oxide. Titanium oxide has high optical reflectivity and concealing properties, and is therefore preferable. Furthermore, aluminum oxide, zinc oxide, and barium titanate have high optical reflectivity in the UV region, and are therefore preferable examples. The average particle size or shape of the white pigment is not restricted, but the average particle diameter is within a range of 0.05 to 10.0 µm and preferable examples are within a range of 0.1 to 5.0 µm. Furthermore, surface treatment of the white pigment can be performed using a silane coupling agent, silica, aluminum oxide, and the like.

Black pigment is a component that can provide blackness to the cured product and provide light shielding properties to the cured product, but needless to say, the black pigment can also have other functions such as electrical conductivity, as represented by carbon black and graphene. Examples of black pigments more specifically include: carbon-based black pigment such as carbon black, graphite, activated carbon, graphene, and the like; inorganic black pigment such as iron oxide, magnetite, chromium iron oxide, chromium iron nickel oxide, copper chromate, chromite, manganese ferrite, nickel manganese iron oxide, complex metal oxides containing <one or more metals selected from iron, cobalt, copper>, and the like; and organic black pigments such as aniline black, cyanine black, perylene black, and the like.

Phosphor is a component that is blended to convert the emission wavelength from a light source (optical semiconductor element) when the cured product is used as a wavelength conversion material. The phosphor is not particularly limited, and examples thereof include yellow, red, green, and blue light phosphors and the like, which include oxide phosphors, oxynitride phosphors, nitride phosphors, sulfide phosphors, oxysulfide phosphors, and the like and are widely used in light emitting diodes (LED).

The present composition may also contain inorganic fillers other than those described above, such as reinforcing fillers, thermally conductive fillers, conductive fillers, and the like, represented by silica to improve the mechanical strength of the cured product. Furthermore, component (E) may be surface treated using one or more well-known surface treatment agents such as low molecular weight organosilicon compounds such as silane, silazane, and the like, and organosilicon polymers or oligomers, for the purpose of stable blending in the present composition. The amount of surface treatment agent used is not particularly limited, but generally ranges from 0.1 to 2.0 mass% with regard to the total mass of component (E). Furthermore, component (E) may be blended in a masterbatch form by pre-compounding with the other components (A) through (D).

The amount of component (E) is preferably within a range of 0.1 to 100 parts by mass, or within a range of 0.5 to 90 parts by mass, or within a range of 0.5 to 80 parts by mass, or within a range of 1.0 to 50 parts by mass, with regard to 100 parts by mass of the total of components (A) to (D). If the amount of component (E) added is less than the aforementioned range, a problem of insufficient coloring effect may occur, and if the amount is higher than the aforementioned range, a problem of excessively high melt viscosity of the obtained hot-melt composition may occur, while at the same time, when produced by the method described below, it may be difficult to mix the entire composition evenly, the manufacturing equipment will readily wear out, and color fading may occur in the obtained composition or the target color may not be obtained.

In addition to components (A) to (E) above, the curable silicone composition of the present invention may further contain a cure retarding agent (E), from the perspective of practicality and further enhancing the storage stability.

The structure of the cure retarding agent is not particularly limited, but the boiling point is preferably 200°C or higher under atmospheric pressure. This is because if a compound with a low boiling point is used as a delayed curing agent when melting and mixing raw materials under reduced pressure in a production of the curable silicone composition sheet described below, a portion or all of the cure retarding agent may volatilize during the manufacturing process composition of the present invention, and thus a targeted cure delaying effect for the curable silicone composition may not be achieved.

The cure retarding agent of the present invention is not particularly limited, and examples include: 2-methyl-3-butyne-2-ol, 3,5-dimethyl-1-hexyne-3-ol, 2-phenyl-3-butyne-2-ol, 1-ethynyl-1-cyclohexanol, and other alkyne alcohols; 3-methyl-3-pentene-1-yne, 3,5-dimethyl-3-hexene-1-yne, and other enyne compounds; tetramethyltetravinylcyclotetrasiloxane, tetramethyltetrahexenylcyclotetrasiloxane, and other alkenyl group-containing low molecular weight siloxanes; and methyl tris(1,1-dimethyl propynyloxy)silane, vinyl tris(1,1-dimethyl propynyloxy)silane, and other alkynyloxysilanes. Of these, the use of compounds with a boiling point of 200°C or higher under atmospheric pressure (for example, vinyl-tris(1,1-dimethylpropynyloxy)silane or the like) is particularly preferable. The amount of the cure retarding agent in the curable silicone composition is not particularly limited, but can be within a range of 1 to 10,000 ppm in mass units, with regard to the composition.

### [Adhesion-imparting agent]

The composition of the present invention may contain a well-known adhesion imparting agent as another optional component so long as an object of the present invention is not impaired. The adhesion imparting agent is not particularly limited so long as being a component that enhances the adhesion to the substrate of the cured product made by curing the present composition, and suitable examples of components suggested by the present applicant in International Patent Application (PCT/JP2020/12027) include silane compounds such as 3-glycidoxypropyltrimethoxysilane and the like; organosiloxane oligomers; alkyl silicates; reactive mixtures of epoxy group-containing organoalkoxysilane and amino group-containing organoalkoxysilane disclosed in Japanese Examined Patent Publication S52-8854 and Japanese Unexamined Patent Application H10-195085; carbasilatrane derivatives having a silicon atom-bonded alkoxy group and a silicon atom-bonded alkenyl group in each molecule; silatrane derivatives having an alkoxysilyl group-containing organic group; and disilyakane compounds such as 1,6-bis(trimethoxysilyl)hexane, and the like. Combinations of 2 or more of these components can be used. Furthermore, while not limited thereto, the amount of the adhesion imparting agent used can be within a range of 0.01 to 10 parts by mass with respect to a total of 100 parts by mass of the present composition.

### [Other additives]

In addition to the aforementioned components, materials well-known in the art as additives that may be used in a silicone composition may be added to the curable hot-melt silicone composition of the present invention. For example, the composition may contain, as other optional components, heat resistance agents such as iron oxide (red iron oxide), cerium oxide, cerium dimethyl silanolate, fatty acid cerium salt, cerium hydroxide, zirconium compound, and the like; and in addition, dyes, pigments other than white, flame retardancy imparting agents, and the like.

### [Sheets and films]

The present composition may be used molded in a sheet or film form. For example, a sheet or film containing the curable silicone composition of the present invention having an average thickness of 10 to 1,000 µm has hot-melt properties and has heat curability under high temperatures. Therefore, the sheet or film has excellent handling workability and melting properties, and is particularly advantageous for use in compression molding or the like. In this case, the composition containing all of components (A) to (F), including component (F), can be molded into a sheet or film.

Such a sheet- or film-like composition can be formed into a uniform mixture of all components using a uniaxial or biaxial continuous kneader, and then the mixture can be passed through two rollers or the like and molded into a sheet or film of a prescribed thickness. Furthermore, once the granular curable hot-melt silicone composition described below is obtained, and after adding component (F) if necessary, the mixture may be kneaded in a kneader to make homogeneous and then passed through a molding machine such as two rollers or the like to manufacture a sheet or film adjusted to a prescribed thickness.

In particular, the present composition uses component (D) as a catalyst for the hydrosilylation reaction, so even if the entire composition is melted and mixed within the temperature range of 50°C to the glass transition temperature (Tg) of the thermoplastic resin constituting component (D) for sheet or film molding, there is an advantage that the catalyst remains inactive and the curing reaction does not progress substantially. This has an advantage that a curable silicone composition sheet or film with excellent storage stability can be obtained even when melt-mixed at a certain temperature during molding.

The sheet- or film-like composition may be manufactured using fine organopolysiloxane resin particles as a raw material (Method A) or may be manufactured using a hot-melt solid fraction, which is obtained by dispersing an organopolysiloxane resin that is a solid at room temperature and optionally a chain diorganopolysiloxane in an organic solvent and then removing the organic solvent, as a raw material (hot-melt bulk method) (Method B). Specifically, the former (method A) includes the following steps:
Step 1: A step of mixing organopolysiloxane resin particles, curing agent, and optionally, in some cases, functional fillers;
Step 2: A step of kneading the mixture obtained in step 1 while heating and melting at a temperature of 120°C or lower;
Step 3: A step where the mixture after heating and melting and mixing obtained in Step 2 is laminated between two films, each having at least one release surface, to form a laminate body; and
Step 4: A step of stretching the mixture in the laminate body obtained in Step 3 between rolls to form a curable hot-melt silicone sheet having a specific film thickness.

On the other hand, the latter (Method B) is a process of:
Step 1: A step of obtaining a hot-melt solid by removing an organic solvent at a temperature of 150°C or higher from a solution in which an organopolysiloxane resin in a solid state at room temperature and optionally a diorganopolysiloxane in a chain state are dispersed or dissolved in an organic solvent;
Step 2: A step where after adding all the curing agents to the hot-meltable solids obtained in Step 1, the mixture is kneaded while heating and melting at a temperature below 120°C;
Step 3: A step wherein the mixture after heating and melting obtained in Step 2 is laminated between two films, each having at least one release surface, to form a laminate body; and
Step 4: A step of stretching the mixture in the laminate body obtained in Step 3 between rolls to form a curable hot-melt silicone sheet having a specific film thickness.

It should be noted that with either production method (Method A or Method B), the kneading step in Step 2 is performed at a temperature of 120°C or lower to prevent the (D) component from softening and activating the curing catalyst, thus enabling stable production of the composition. Furthermore, Step 3 and Step 4 can be continuous and integrated, and for example, the heated and melted mixture obtained in Step 2 is laminated by being discharged or applied between films having at least one release surface directly under the rollers, and at the same time, the film may be stretched and molded to a specific thickness by adjusting the gap between the rollers. Thus, a manufacturing method having a process in which Step 3 and Step 4 are substantially integrated is also included within the scope of the above manufacturing method.

In other words, Steps 3 and 4 may be carried out in a continuous and integrated manner, for example, a process in which the mixture obtained in Step 2 is discharged or applied between two release films to sandwich the aforementioned mixture between the two release films, such as between two long release films, and a process in which a laminated body comprising the two release films and the aforementioned mixture interposed therebetween is continuously passed between rolls to stretch and form the mixture between the release films to obtain a desired laminated body. Such a method in which Step 3 and Step 4 are performed in an integrated manner is also included in the above-described manufacturing method.

In addition, in the above Step 3 for method A or method B, the process of laminating the mixture after heating and melting between the films is not particularly limited, and may be a process in which
(i) the mixture after heating and melting from Step 2 is discharged or applied onto a first release film having a release surface, and then a second release film is brought into contact with the surface of the mixture opposite to the surface in contact with the first release film, such that the mixture after heating and melting is interposed, or in other words sandwiched, between the first and second release films; or in which:
(ii) the mixture after heating and melting in Step 2 is discharged or applied between the first release film and the second release film having a peeling surface, such that the mixture after heating and melting is interposed between the two release films. An example of (ii) is bringing the first and second release films into close proximity by suitable means, such as two rolls, and discharging or coating the mixture from Step 2 at the point where the two release films are brought into close proximity, thereby placing the mixture in the gap between the two release films at the same time or approximately at the same time. Steps 3 and 4 above may be continuous processes.

With respect to the manufacturing method thereof, the present applicants have proposed an entire process for manufacturing a curable silicone sheet and a manufacturing apparatus used therewith in Japanese Patent Application 2019-167832 and Japanese Patent Application 2019-167833, as well as priority claim applications thereof (including international patent applications). The present invention can use this method and manufacturing apparatus for making a sheet or a film of the curable hot-melt silicone composition.

[Laminate Body Containing Curable Hot-Melt Silicone Composition and Use Thereof as Film Adhesive/Sealing Agent]

The present curable hot-melt silicone composition can be used in a sheet or film form, and can be particularly used as a laminate body having a structure in which a sheet-like material containing the curable hot-melt silicone composition described above is interposed between two film-like substrates provided with a release layer. The film-like substrate provided with the release layer (generally referred to as release film) can be released from the sheet-like material containing the curable hot-melt silicone composition when the sheet-like material is used as an adhesive, sealing agent, or the like. The laminate body is also referred to as a releasable laminate body below.

Although there are no particular limitations on the method of manufacturing the peelable laminate body, a method including the following steps can be mentioned as an example:
Step 1: Mixing the components of the curable hot-melt silicone composition;
Step 2: Kneading the mixture obtained in Step 1 while heating and melting;
Step 3: Laminating the mixture heated and melted in Step 2 between two release films with at least one release surface, so that the mixture is in contact with the release surfaces to form a laminate body; and
Step 4: Pressing the laminate body obtained in Step 3 between rolls to roll press the mixture interposed between the two release films and form a curable hot-melt silicone composition sheet or film with a specific film thickness.

Furthermore, rollers with a cooling or temperature adjusting function may be optionally used in Step 4. Furthermore, a step of cutting a resulting laminate body containing the curable hot-melt silicone composition sheet or film may be added after Step 4.

Note that the thickness of the release film is not particularly limited; therefore, in addition to those generally referred to as a film, those referred to as a sheet are also included. However, in the present specification, it is referred to as a release film regardless of the thickness thereof.

The temperature of the mixing process in Step 1 above is not particularly limited, but heating may be performed as necessary to ensure that each component is sufficiently mixed. For example, the heating temperature can be 50°C or higher.

By removing the release film from the peelable laminate body of the present invention, a sheet or film comprising the curable hot-melt silicone composition is obtained. Therefore, the present invention also provides such a sheet or film. The sheet or film of the present invention can be 10 to 1000 µm thick, and the sheet or film can be flat. Flat means that the thickness of the resulting sheet or film is within the range of ±100 µm or less, preferably within the range of ±50 µm or less, and more preferably within the range of ±30 µm or less.

The type of substrate for the release film that constitutes the peelable laminate body is not limited, but polyester film, polyolefin film, polycarbonate film, or acrylic film, for example, can be used as appropriate. The sheet-like substrate can be non-porous. A release film is a film having a release layer formed by treating one or both sides of a film made of such a material to give it release properties, and such treatments are known in the art.

The release layer is a releasable layer applied to the surface of a release film. Moreover, the release layer is a structure that allows a sheet or film made of a curable silicone composition to be easily released from a film-like substrate, and is sometimes referred to as a release liner, separator, mold release layer or release coating layer. Suitably, the release layer can be formed as a release layer with release coating capability such as with a silicone release agent, fluorine release agent, alkyd release agent, or fluorosilicone release agent. Alternatively, the surface of the film substrate may be physically formed with minute irregularities to reduce adhesion to the curable silicone composition, or the substrate may be made of a material that adheres only with difficulty to the curable hot-melt silicone composition of the present invention or to a layer comprising a cured product thereof. In particular, in the laminated body of the present invention, a release layer obtained by curing a fluorosilicone based release agent is preferably used as the release layer.

The laminate body described above can be used, for example, by peeling off one of the two release films comprising the laminate body, applying the uncured sheet or film-like member consisting of the curable silicone composition that is not in contact with the release film to the adherend, and then peeling off the uncured sheet or film-like member from the other film-like substrate, that is, the release film.

The curable silicone composition is a low-flow or no-flow solid at 25°C, and can be handled at room temperature in granular, pellet or sheet form. Here, non-flow properties means that the curable silicone composition does not deform and/or flow in the absence of external force, and suitably, the curable silicone composition does not deform and/or flow at 25°C and in the absence of external force when molded into pellets or tablets. Such non-flow properties can be assessed, for example, by placing the molded composition on a hot plate at 25°C and applying no external force or a certain amount of weight to the composition, and making sure substantial deformation and/or flow of the composition does not occur. If the composition is non-flowable at 25°C, handling even in an uncured state is simple because shape retention of the composition is favorable at that temperature and the surface adhesion thereof is low.

The softening point of the composition is preferably 100°C or less. Such a softening point means the temperature at which the deformation amount of the composition in the height direction is 1 mm or more when the composition is pressed for 10 seconds from above with a 100 gram load at a height of 22 mm on a hot plate and the deformation of the composition is measured after the load is removed.

### [Viscosity and flow properties during heating and melting]

The viscosity of the present composition tends to decrease rapidly with an increase in temperature at high temperature and high pressure (in other words, for example, in the manufacturing process of the laminate body described above), and can be used as a useful melt viscosity value for handling the composition, the value measured under high temperature and high pressure similar to the conditions when the composition is actually used. Therefore, the melt viscosity of the present invention can be measured under high pressure using a Koka-type flow tester (manufactured by the Shimadzu Corporation) then measured with a rotational viscometer such as a rheometer. Specifically, the present composition can have a melt viscosity at 150°C of 200 Pa-s or less, or 150 or less, as measured using a Koka-type flow tester. This is because of the favorable adhesion of the composition to the substrate after hot-melting (in other words, after heating and melting) and cooling to 25°C.

### [Curable Hot-Melt Silicone Composition Sheet]

The curable hot-melt silicone composition sheet obtained by the manufacturing method of the present invention is a curable silicone composition containing components (A) to (E) and, in some cases, component (F) described above, and has hot-melt properties. The curable hot-melt silicone composition sheet of the present invention can be used as a pressure sensitive adhesive material, sealing agent, and/or adhesive, or the like, having heat-melting properties. In particular, the curable hot-melt silicone composition sheet has excellent moldability, gap filling properties, and pressure sensitive adhesive force, and can be used as a die attach film or film adhesive. Furthermore, the sheet can also be suitably used as a compression molding or press molding curable hot-melt silicone composition sheet.

Specifically, the curable hot-melt silicone composition sheet obtained by the manufacturing method of the present invention may release the release film, and then be disposed at a desired site such as a semiconductor or the like. Subsequently, a film adhesive layer utilizing gap filling properties with regard to protrusions and recesses or gaps may be formed on and between adherends, followed by being temporarily secured, disposed, and applied together between the adherends. Furthermore, the curable hot-melt silicone composition layer can be cured by heating to 120°C or higher, or 150°C or higher, and a cured product of the curable silicone sheet can be formed between the adherends to adhere the adherends. Note that the release film may be released after the curable hot-melt silicone composition sheet is heated to form a cured product, and a timing for releasing the release film from the curable silicone composition or cured product obtained therefrom may be selected based on an application and method of use of the curable silicone composition sheet.

In addition to storage stability, the curable silicone composition or sheet/film of the present invention has hot-melt properties that provide excellent flow properties and low viscosity at high temperature. Therefore, the sheet can be softened or fluidized by heating prior to final curing, for example, to form an adhesive surface with an adherend by filling protrusions and recesses or gaps without a void, even if there are minute irregularities on the adhesive surface of the adherend.

### [Method of forming cured product]

This curable hot-melt silicone composition can be cured by a method that includes at least the following steps (I) through (III).
(I) Step of heating the present composition to a temperature of 120°C or higher to melt the composition;
(II) a step of injecting the melted curable hot-melt silicone composition obtained in step (I) above into a mold or a step of distributing the melted curable hot-melt silicone composition obtained in step (I) above to a mold by mold clamping; and
(III) a step of curing the curable hot-melt silicone composition injected into a mold in step (II) above.

In the above steps, a transfer molding machine, a compression molding machine, an injection molding machine, an auxiliary ram molding machine, a slide molding machine, a double ram molding machine, a low pressure sealing molding machine, or the like can be used. In particular, the composition of the present invention can be suitably used for the purpose of obtaining a cured product by transfer molding and compression molding.

Finally, in step (III), the curable silicone composition injected (applied) into a mold in step (II) is cured. The step can and is preferably performed at a low temperature, as described below.

The curable silicone composition of the present invention can form a cured product by exposing the composition (or a semi-cured product thereof) of the present invention to a temperature of 120°C or higher to activate the hydrosilylation catalyst, which is component (D), such that the hydrosilylation reaction in the composition advances. Furthermore, due to the nature of component (D), a cured product can be obtained at temperatures as low as 100°C once the catalyst is activated by exposure above the softening temperature.

### [Use of composition]

The curable hot-melt silicone composition of the present invention has hot-melt properties, excellent workability and curability while melted (hot-melted), and excellent coloring resistance of a resulting cured product obtained by curing the present composition at high temperature. Therefore, the composition is effectively used for sealing agents for light emitting/optical devices, optical reflective materials and other semiconductor members, and optical semiconductors having the cured product. Furthermore, since the cured product has superior mechanical properties, the cured product is suitable as: a sealing agent for semiconductors; a sealing agent for power semiconductors such as SiC, GaN, or the like; and as an adhesive, potting agent, protective agent, and coating agent for electrical and electronic applications. The curable hot-melt silicone composition of the present invention in sheet form is also suitable as a material for sealing and adhering large-area substrates using press molding, compression molding, as a vacuum laminator, or the like. In particular, the composition is preferably used as a sealing agent for semiconductors using an overmold molding method at the time of molding. Furthermore, a sheet of this composition can be used as a curable film adhesive or as a buffer layer for stress between two substrates with different coefficients of linear expansion.

In addition, the curable hot-melt silicone composition of the present invention, and particularly the curable hot-melt silicone composition in sheet form, can be used for large-area sealing of semiconductor substrates (including wafers). Furthermore, a sheet formed from the curable hot-melt silicone composition of the present invention can be used for die attach films, sealing a flexible device, stress relief layers for bonding two different substrates, and the like. In other words, the curable silicone composition of the present invention may be a sealing agent for single-sided sealing or for double-sided sealing along with adhesion between two substrates, and have preferred properties suitable for these applications.

### [Viscosity properties (thixotropy) of the composition at high temperature]

The curable silicone composition of the present invention has hot-melt properties and is flowable at a temperature above 100°C, and viscosity can be measured. The viscosity is strongly dependent on the shear force applied during measurement, and is thixotropic, with high viscosity at low shear and low viscosity at high shear. Specifically, the viscosity at 100°C and 150°C as measured by a rheometer at a shear rate of 1s-1 is 5000 Pas or lower, and 1000 Pas or lower, respectively, but the viscosity at 100°C and 150°C is 500 Pas or less and 200 Pas or less, respectively, when measured using a flow tester which is thought to have an extreme shear rate at a pressure of 2.5 MPa. These viscosity characteristics are advantageous in the step of static curing in an oven or the like, after temporarily adhering the curable hot-melt silicone composition to the substrate using a vacuum laminator, vacuum low-pressure press, or the like. In other words, during temporary bonding, pressure is applied instantaneously at a certain temperature condition to cause bonding to the substrate, but since pressure is applied at this time, the viscosity is reduced and gap-filling properties are excellent for substrates with many irregularities or the like. On the other hand, no pressure is applied during subsequent static curing in an oven or the like, so no dripping occurs before the curing process begins because of the high viscosity of the composition, even when cured at 150°C or higher.

### [Composition curing conditions and lamination timing]

As described above, the curable silicone composition of the present invention is exposed to a higher temperature than the Tg of component (D) in order to activate the catalyst and enable rapid curing. Therefore, a precursor of a laminate body integrated with a substrate cam be formed without advancement of any curing reaction by bonding the laminate body to the substrate by thermocompression bonding or the like below the Tg of component (D). The composition of the present invention can be quickly cured by exposing the precursor of the laminate body to a temperature above the Tg of component (D). In addition, the catalyst can be activated during thermocompression bonding if thermocompression bonding of the substrate and the composition of the present invention is performed at or above the Tg of component (D), and thereby the composition can be simultaneously cured during thermocompression bonding or the resulting precursor of the laminate body can be cured at a lower temperature. Therefore, the process can be selected flexibly according to the structure of the device and the bonding portion or the like, and the curing reaction can be performed under the desired conditions.

As an example, a laminate body, having an uncured sheet or film of the curable silicone composition of the present invention with hot-melt properties can be obtained by adhering at least one side of the sheet or film of the curable silicone composition of the present invention to a portion or all of a substrate (for example, an electronic component or precursor thereof) by one or more means selected from vacuum laminating, vacuum pressing, and compression molding. The laminate body is heated above the glass transition temperature (Tg) of the thermoplastic resin constituting component (D) in close contact with other substrates, if necessary, so that the curable silicone composition of the present invention is filled into the minute irregularities and gaps on the substrate, and then a curing reaction proceeds to form the laminate body with the cured product of the composition.

Furthermore, the lamination process of adhering at least one side of the sheet or film of the curable silicone composition of the present invention to all or a portion of the substrate by the means described above may be performed simultaneous to or in parallel with the process of heating above the glass transition temperature (Tg) of the thermoplastic resin constituting component (D). Furthermore, when the cured product of the curable silicone composition of the present invention is used as an adhesion layer or stress relieving layer for two or more substrates, this process may be performed while in close contact with the other substrates.

### [Light shielding properties of cured product]

Depending on the selection of component (E) described above, the cured product of the present invention can be designed to have light shielding properties or light reflecting properties, and can be preferably used for optical applications that use these properties. The cured product of the present invention has a parallel light transmittance of 50% or less, more preferably 30% or less, at a wavelength of 360 nm with an optical path length of 1 mm, as measured in accordance with JIS K 7105.

### [Hardness of cured product]

A preferred hardness of the cured product obtained by curing the curable hot-melt silicone composition of the present invention can be classified into two categories depending on an application thereof. When adherends are adhered to both surfaces of the curable hot-melt silicone composition sheet of the present invention, the Type A durometer hardness specified in "Durometer Hardness Test Method for Plastics" of JIS K 7215-1986 is preferably 40 or higher. This is because if the hardness is at or below the lower limit described above, the cured product tends to be too soft and brittle. On the other hand, if the application thereof is substrate sealing, the Type A durometer hardness is preferably 60 or higher. This is because if the hardness is at or below the lower limit described above, the surface of the cured product becomes sticky, and thus handling performance is reduced.

### [Use of cured product]

An application of the cured product obtained by curing the curable silicone composition of the present invention is not particularly limited. The composition of the present invention has hot-melt properties, excellent curing properties when triggered at a certain temperature, and excellent moldability and mechanical properties. The cured product is relatively hard with little surface tack. Therefore, the cured product obtained by curing the present composition can be suitably used as a member for a semiconductor device, and can be suitably used as a sealing agent for a semiconductor element, an IC chip or the like, and as an adhesive/bonding member of a conductor device.

Although the semiconductor devices provided with a member containing a cured product obtained by curing the curable silicone composition of the present invention are not particularly limited, the composition of the present invention forms a cured product with light shielding properties or light reflecting properties, and thus is preferably used in applications that require light shielding or light reflectance. Preferable examples include light-emitting semiconductor devices, which are light-emitting or optical devices, optical members for displays, solar panel members, and particularly sealing materials or adhesive members used in these devices and the like.

### [EXAMPLES]

The curable silicone composition of the present invention and manufacturing method thereof are described below in detail using examples and comparative examples. Note that in the following description, Me, Vi, and Ph in the average unit formula represent methyl, vinyl, and phenyl groups, respectively. Furthermore, the softening point, curability, and storage stability of the of the curable silicone compositions of each Embodiment and comparative example were measured by the following methods. The results are shown in Table 1.

### [Softening Point]

The curable silicone composition was molded into cylindrical pellets of ϕ14 mm x 22 mm. The pellet was placed on a hot plate set at 25°C to 100°C and continuously pressed from above for 10 seconds by a load of 100 grams, and after the load was removed, the amount of deformation of the pellet was measured. The temperature at which the deformation amount in the height direction was 1 mm or more was defined as the softening point.

### [Melt Viscosity at 150°C]

The melt viscosity of the curable silicone composition at 150°C was measured using a Koka-type flow tester CFT-500EX (manufactured by Shimadzu Corporation) using a nozzle with a 1.0 mm outlet nozzle diameter at 2.5 MPa pressure.

### [Curing properties]

The curable silicone composition was vulcanized for 600 seconds at a predetermined temperature using a curastometer (PREMIERMDR manufactured by Alpha Technologies) in accordance with a method specified in JIS K 6300-2:2001, "Unvulcanized Rubber - Physical Properties - Part 2: Determination of Vulcanization Characteristics Using a Vibratory Vulcanization Tester" to measure the curing properties. The measurements for Examples 1 to 4 and Comparative Examples 2 to 8 were performed at 160°C, and measurements for Examples 5 and 6, and Comparative Example 1 were performed at 120°C. Furthermore, in Comparative Examples 2 to 4, UV light with a wavelength of 365 nm was irradiated at a dose of 10 J/cm² before measurement. Note that for the measurement, a lump of the curable hot-melt silicone composition was weighed out at approximately 5 g, sandwiched between 50 µm-thick PET films, then placed on a lower die, after which measurement was initiated once the upper die had closed. The measurements were made using an R-type die for rubber, with an amplitude angle of 0.53°, a vibration frequency of 100 times/minute, and a maximum torque range of 230 kgf-cm. As a result of the measurement, the time (TS-1) required to exceed a torque value of 1 dNm was read in units of minutes. Furthermore, the time to reach 90% of the maximum torque (TC-90) was read in units of minutes. An estimate was made for the time until initial curing was almost complete.

### [Storage Stability]

The curable silicone composition was aged in an oven at 40°C for one week. The curing properties were then measured using the method described above and the TS-1 value was read.

### [Surface tack of cured product]

The curable silicone composition was vulcanized at a predetermined temperature for 10 minutes to form a cured product. Examples 1 to 4 and Comparative Examples 2 to 8 were cured at 160°C, and Examples 5 and 6 and Comparative Example 1 were cured at 120°C. Furthermore, in Comparative Examples 2 to 4, UV light with a wavelength of 365 nm was irradiated at a dose of 10 J/cm² before curing. The cured film was evaluated as "no surface tack" if there was no sticking when a PET film was pressed against the cured film, and as "surface tacky" if there was sticking.

### [Reflectance of cured product]

The curable silicone composition was vulcanized at a predetermined temperature for 10 minutes to form a cured product with a thickness of 300 µm. Examples 1 to 4 and Comparative Examples 2 to 8 were cured at 160°C, and Examples 5 and 6 and Comparative Example 1 were cured at 120°C. Furthermore, in Comparative Examples 2 to 4, UV light with a wavelength of 365 nm was irradiated at a dose of 10 J/cm² before curing. The reflectance of the cured material was measured using a UV-VIS spectrophotometer UV3100PC (produced by Shimadzu Corporation), and the reflectance was read at a wavelength of 450 nm.

### [Transparency of cured product]

The curable silicone composition was vulcanized at a predetermined temperature for 10 minutes to form a cured product with a thickness of 300 µm. Examples 1 to 4 and Comparative Examples 2 to 8 were cured at 160°C, and Examples 5 and 6 and Comparative Example 1 were cured at 120°C. Furthermore, in Comparative Examples 2 to 4, UV light with a wavelength of 365 nm was irradiated at a dose of 10 J/cm² before curing. The transmissivity of the cured material was measured using a UV-VIS spectrophotometer UV3100PC (produced by Shimadzu Corporation), and the transmissivity was read at a wavelength of 450 nm.

Mixtures having the hot-melt properties of organopolysiloxane resin and straight-chain organopolysiloxanes were prepared by the methods indicated in following Reference Examples 1 to 3. Furthermore, the organopolysiloxane resin fine particles were prepared by the methods shown in Reference Examples 4 and 5. Note that both preparation methods include a step of removing low molecular weight organopolysiloxane components, and the M₄Q structure is removed as much as possible from the resulting raw material.

### [Reference 1: Hot-melt mixture 1]

2.40 kg of an organopolysiloxane resin that is a white solid at 25°C, expressed by the average unit formula:

(Me₂ViSiO_{1/2})_{0.05}(Me₃SiO_{1/2})_{0.39}(SiO_{4/2})_{0.56}(HO_{1/2})_{0.02}

(amount of vinyl group = 1.9 mass%),
4.46 kg of an organopolysiloxane resin that is a white solid at 25°C, expressed by the average unit formula:

   (Me₃SiO_{1/2})_{0.44}(SiO_{4/2})_{0.56}(HO_{1/2})_{0.02}
(amount of vinyl group = 0 mass%), and
2.69 kg of dimethylpolysiloxane capped at both molecular terminals with dimethylvinylsiloxy groups, expressed by the formula: ViMe₂SiO(Me₂SiO)₈₀₀SiViMe₂ (amount of vinyl group = 0.09 mass%)
were dissolved in 4.00 kg of xylene in a pail using a three-one motor.

The resulting solution was fed into a twin-screw extruder with the maximum attainable temperature set at 230°C. The xylene and low molecular weight organopolysiloxane components were removed under a vacuum of -0.08 MPa, resulting in a hot-melt mixture 1. The mixture 1 was placed in a pail and cooled to a solid state. The amount of volatile components in this mixture based on conditions of 200°C for 1 hour were measured and was 0.7 mass%.

### [Reference 2: Hot-melt mixture 2]

3.09 kg of an organopolysiloxane resin that is a white solid at 25°C, expressed by the average unit formula:

(Me₂ViSiO_{1/2})_{0.05}(Me₃SiO_{1/2})_{0.39}(SiO_{4/2})_{0.56}(HO_{1/2})_{0.02}

(amount of vinyl group = 1.9 mass%),
3.77 kg of an organopolysiloxane resin that is a white solid at 25°C, expressed by the average unit formula:

   (Me₃SiO_{1/2})_{0.44}(SiO_{4/2})_{0.56}(HO_{1/2})_{0.02}
(amount of vinyl group = 0 mass%), and
2.69 kg of dimethylpolysiloxane capped at both molecular terminals with dimethylvinylsiloxy groups, expressed by the formula: ViMe₂SiO(Me₂SiO)₈₀₀SiViMe₂ (amount of vinyl group = 0.09 mass%)
were dissolved in 4.00 kg of xylene in a pail using a three-one motor.

The resulting solution was fed into a twin-screw extruder with the maximum attainable temperature set at 230°C. The xylene and low molecular weight organopolysiloxane components were removed under a vacuum of -0.08 MPa, resulting in a hot-melt transparent mixture 2. The mixture 2 was placed in a pail and cooled to a solid state. The amount of volatile components in this mixture based on conditions of 200°C for 1 hour were measured and was 0.7 mass%.

### [Reference 3: Hot-melting mixture 3]

3.76 kg of an organopolysiloxane resin that is a white solid at 25°C, expressed by the average unit formula:

(Me₂ViSiO_{1/2})_{0.05}(Me₃SiO_{1/2})_{0.39}(SiO_{4/2})_{0.56}(HO_{1/2})_{0.02}

(amount of vinyl group = 1.9 mass%),
3.08 kg of an organopolysiloxane resin that is a white solid at 25°C, expressed by the average unit formula:

   (Me₃SiO_{1/2})_{0.44}(SiO_{4/2})_{0.56}(HO_{1/2})_{0.02}
(amount of vinyl group = 0 mass%), and
2.56 kg of dimethylpolysiloxane capped at both molecular terminals with dimethylvinylsiloxy groups, expressed by the formula: ViMe₂SiO(Me₂SiO)₈₀₀SiViMe₂ (amount of vinyl group = 0.09 mass%)
were dissolved in 4.00 kg of xylene in a pail using a three-one motor.

The resulting solution was fed into a twin-screw extruder with the maximum attainable temperature set at 230°C. The xylene and low molecular weight organopolysiloxane components were removed under a vacuum of -0.08 MPa, resulting in a hot-melt transparent mixture 3. The mixture 3 was placed in a pail and cooled to a solid state. The amount of volatile components in this mixture based on conditions of 200°C for 1 hour were measured and was 0.7 mass%.

### [Reference 4: Silicone fine particles (1')]

A xylene solution containing 55 mass% of the resinous organopolysiloxane expressed by the average unit formula:

(Me₂ViSiO_{1/2})_{0.05}(Me₃SiO_{1/2})_{0.39}(SiO_{4/2})_{0.56}(HO_{1/2})_{0.02}

was atomized while removing the xylene by spray-drying at 50°C to produce true-spherical non-hot-melt silicone fine particles (1).

The fine particles were observed using a light microscope, and the particle size was 5 to 10 µm, and the average particle size was 6.5 µm.

The resulting silicone fine particles (1) were aged in an oven at 120°C for one week to obtain true-spherical non-hot-melt silicone particles (1 ') with the M₄Q component removed. The amount of volatile components in the fine particles was measured at conditions of 200°C for 1 hour, and found to be 0.6 mass%.

### [Reference 5: Silicone fine particles (2')]

A xylene solution containing 55 mass% of the resinous organopolysiloxane expressed by the average unit formula:

(Me₃SiO_{1/2})_{0.44}(SiO_{4/2})_{0.56}(HO_{1/2})_{0.02}

was atomized while removing the xylene by spray-drying at 50°C to produce true-spherical non-hot-melt silicone fine particles (2).

The fine particles were observed using a light microscope, and the particle size was 5 to 10 µm, and the average particle size was 6.5 µm.

The resulting silicone fine particles (2) were aged in an oven at 120°C for one week to obtain true-spherical non-hot-melt silicone particles (2') with the M₄Q component removed. The amount of volatile components in the fine particles was measured at conditions of 200°C for 1 hour, and found to be 0.7 mass%.

### (Examples 1 to 6, Comparative Examples 1 to 7)

In the examples of the present application and the comparative examples, the following components were used in addition to using each of the components in the reference examples as mixture (a + b) including component (A) and component (B).
(b) dimethylpolysiloxanes capped at both molecular terminals with dimethylvinylsiloxy groups

   ViMe₂SiO(Me₂SiO)₈₀₀SiViMe₂ (vinyl group content = 0.09 mass%)
(C) SiH siloxane
(c-1) (PhSiO_{3/2})_{0.4}(HMe₂SiO_{1/2})_{0.6} (SiH group content = 0.6 mass%)
(c-2) (HMe₂SiO_{1/2})_{0.52}(Me₂SiO_{2/2})_{0.15}(SiO_{4/2})_{0.33} (SiH group content = 0.79 mass%)
(D) Fine particles containing hydrosilylation reaction catalyst
(d-1) Thermoplastic polycarbonate resin fine particles (Tg of thermoplastic resin = 145°C) containing 4000 ppm of 1,3-divinyl-1,1,3,3-tetramethyldisiloxane complex of Pt (0 valence) as platinum content
(d-2) Thermoplastic acrylic resin fine particles (Tg of thermoplastic resin = 115°C) containing 4000 ppm of 1,3-divinyl-1,1,3,3-tetramethyldisiloxane complex of Pt (0 valence) as platinum content
(d') Fine particles of thermoplastic silicone resin (Tg=100°C) expressed by the average unit formula:

   (CH₃)₂SiO_{2/2}]_{0.22}(C₆H₅SiO_{3/2})_{0.78}
containing 400 ppm of 1,3-divinyl-1,1,3,3-tetramethyldisiloxane complex of Pt(0-valence) as platinum content
(d") (Methylcyclopentadienyl)trimethyl platinum (IV)
(d‴) 1,3-divinyltetramethyldisiloxane solution of a 1,3-divinyltetramethyldisiloxane complex of platinum (0 valence)
(E) Fillers and pigments
(e1) Titanium dioxide having an average particle size of 0.5 µm (SX-3103 manufactured by Sakai Chemical Industry Co., Ltd.)
(e2) Carbon black with an average particle size of 35 nm (DENKA Black Pressed Product by DENKA Corporation)
(e3) Alumina having an average particle size of 0.44 µm (AES-12 manufactured by Sumitomo Chemical Company Ltd.)
(e4) Alumina having an average particle size of 3.0 µm (AL-M73A manufactured by Sumitomo Chemical Company Ltd.)
(e5) Alumina with an average particle size of 37.4 µm (AZ35-125 manufactured by Micron Company of Nippon Steel & Sumikin Materials Co. Ltd.)
(F) Curing retarding agent
(f) Methyltris-1,1-dimethyl-2-propynyloxysilane

For Examples 1 to 7 and Comparative Examples 1 to 5, white or black curable hot-melt silicone compositions were prepared according to the following procedure. At the same time, as Comparative Examples 6 and 7, a uniform granular curable silicone composition was prepared by batch feeding all of the components into a small grinder according to the following procedures. The constitution of each composition, the number of parts, and the SiH/Vi ratio of the entire composition are shown in Table 1 and Table 2. In addition, the values for softening viscosity, melt viscosity, TS-1 (initially and after aging for one week at 40°C), and TC90 of each composition, as well as the physical properties of the cured products (surface tack, reflectance and transmittance) are shown in Table 3.

### <Examples 1 to 7 and Comparative Examples 1 to 5>

The resulting hot-melt mixtures 1 to 3 obtained in Reference Examples 1 to 3 were fed into a twin-screw extruder at 170°C by a hot-melter (VersaPail Melter manufactured by Nordson) for cylindrical pails from line 1 as depicted in FIG. 1.

Next, component (E) was fed from line 3-a and components (C) and (F) were fed from line 3-b at a set temperature of 150°C. Next, component (D) diluted with component (B) was fed from line 3-c at a set temperature of 80°C. The vacuum in the extruder was -0.08 MPa during degassing melt kneading.

The outlet temperature of the twin-screw extruder was set at 80°C. The mixture was in the form of semi-solid softened material. While transporting 330 mm wide and 125-pm-thick release films (FL2-01 manufactured by TAKARA INC. CO. Ltd.) at a rate of 1.0 m/min, the mixture was supplied onto a release film such that the feed rate was 5 kg/hr. The mixture was then interposed between two release films such that a release surface of the release film was in contact with the mixture to form a laminate body. Subsequently, the laminate body was then pressed between rollers with temperatures controlled at 90°C to stretch the mixture between the release films to form a laminate body in which a curable hot-melt silicone composition sheet having a thickness of 300 µm was interposed between the two release films. The entire laminate body was then cooled by air cooling. The configuration of the manufacturing device is illustrated in Fig.1.

### <Comparative Examples 6, 7>

The true-spherical non-hot-melt silicone particles (1') or (2') obtained in Reference Examples 4 and 5, component (B), component (C), component (D), component (E), and component (F) were fed into a small grinder in batches and stirred at room temperature (25°C) for 1 minute to prepare a uniform white curable granular silicone composition. Next, the resulting granular silicone composition was fed into a Brabender set at 90°C and melted and kneaded at 50 rpm for 3 minutes to obtain a uniformly mixed composition.

**[Table 1]**

| | Example 1 | Example 2 | Example 3 | Example 4 | Example 5 | Example 6 |
|---|---|---|---|---|---|---|
| (a+b) Hot-melting mixture 1 | 95.5 | 95.5 | | | | |
| (a+b) Hot-melting mixture 2 | | | 95.6 | | 95.6 | |
| (a+b) Hot-melting mixture 3 | | | | 94.0 | | 94.0 |
| b* | 1.5 | 1.5 | 1.5 | 1.5 | 1.5 | 1.5 |
| c-1 | 3 | 3 | | 4.52 | | 4.52 |
| c-2 | | | 2.95 | | 2.95 | |
| d-1 (platinum atoms, ppm) | 6 | 6 | 8 | 10 | | |
| d-2 (platinum atoms, ppm) | | | | | 8 | 10 |
| e-1 (white) | 33.4 | 33.4 | | | | |
| e-2 (black) | | | 1.1 | | 1.1 | |
| e-3 (white) | | | | 33.4 | | 33.4 |
| e-4 (white) | | | | | | |
| e-5 (white) | | | | | | |
| f(ppm) | 100.0 | 50.0 | 100.0 | 100.0 | 100.0 | 100.0 |
| SiH/Vi | 1.02 | 1.02 | 1.02 | 1.02 | 1.02 | 1.02 |

**[Table 2]**

| | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|
| (a+b) Hot-melting mixture 1 | | 95.5 | | | | | | |
| (a+b) Hot-melting mixture 2 | | | 95.6 | | | | | |
| (a+b) Hot-melting mixture 3 | 94.0 | | | 94.0 | 94.0 | 94.0 | | |
| (a') Silicone fine particles 1' | | | | | | | 7 | 7 |
| (a") Silicone fine particles 2' | | | | | | | 59.2 | 59.2 |
| b* | 1.5 | 1.5 | 1.5 | 1.5 | 1.5 | 1.5 | 32.8 | 32.8 |
| c-1 | 4.52 | 3 | | 4.52 | 4.52 | 4.52 | 1 | 1 |
| c-2 | | | 2.95 | | | | | |
| d-1 (platinum atoms, ppm) | | | | | | | 10 | 10 |
| d-2 (platinum atoms, ppm) | | | | | | | | |
| d' (platinum atoms, ppm) | 10 | | | | | | | |
| d" (platinum atoms, ppm) | | 6 | 8 | 10 | | | | |
| d'" (platinum atoms, ppm) | | | | | 4 | 4 | | |
| e-1 (white) | | 33.4 | | | 33.4 | | | 150 |
| e-2 (black) | | | 1.1 | | | 1.1 | | |
| e-3 (white) | 33.4 | | | 33.4 | | | 82.8 | |
| e-4 (white) | | | | | | | 166.1 | |
| e-5 (white) | | | | | | | 364.1 | |
| f(ppm) | 100.0 | 200.0 | 200.0 | 200.0 | 3500.0 | 1500.0 | 100 | 100 |
| SiH/Vi | 1.02 | 1.02 | 1.02 | 1.02 | 1.02 | 1.02 | 1.02 | 1.02 |

| | | | | | | | | |
|---|---|---|---|---|---|---|---|---|
| * In Examples 1 to 6 and Comparative Examples 1 to 6, a small amount of (B) component was used to dilute component (D). | | | | | | | | |

**[Table 3]**

| | Example 1 | Example 2 | Example 3 | Example 4 | Example 5 | Example 6 | | |
|---|---|---|---|---|---|---|---|---|
| Color of Composition | White | White | Black | White | Black | White | | |
| Melting temperature [°C] | 90 | 90 | 85 | 85 | 85 | 85 | | |
| Melt viscosity (150°C) [Pa·s] | 45 | 45 | 10 | 38 | 10 | 39 | | |
| TS-1 (initial) [min] | 0.68 | 0.63 | 0.51 | 0.44 | 3.11 | 2.23 | | |
| TS-1 (1 week @ 40°C) [Pa·s] | 0.71 | 0.59 | 0.55 | 0.46 | 3.25 | 2.34 | | |
| TC90 [min] | 6.3 | 3.4 | 3.8 | 2.6 | 6.3 | 5.4 | | |
| Surface tack of cured product | Absent | Absent | Absent | Absent | Absent | Absent | | |
| Reflectance of cured product (@ 450 nm, thickness = 300 µm) | 96.2 | 95.9 | | 88.9 | | 89.1 | | |
| Transmittance of cured product (@ 450 nm, thickness = 300 µm) | | | 0.01 | | 0.02 | | | |

| | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|
| Color of Composition | White | White | Black | White | White | Black | White to Gray | White to Gray |
| Melting temperature [°C] | 85 | 90 | 85 | 85 | 80 | 80 | 100 | 110 |
| Melt viscosity (150°C) [Pa·s] | 39 | 46 | 10 | 40 | 39 | 39 | 310 | 440 |
| TS-1 (initial) [min] | 0.39 | >10 | >10 | >10 | >10 | 2.41 | 2.15 | 3.23 |
| TS-1 (1 week @ 40°C) [Pa·s] | Cured | >10 | >10 | >10 | >10 | 0.56 | 2.27 | 3.55 |
| TC90 [min] | 5.1 | - | - | - | - | 9.7 | 5.4 | 6.1 |
| Surface tack of cured product | Absent | - | - | - | - | Absent | Absent | Absent |
| Reflectance of cured product (@ 450 nm, thickness = 300 µm) | 88.8 | - | - | - | - | - | 63.4 | 81.4 |
| Transmittance of cured product (@ 450 nm, thickness = 300 µm) | | - | - | - | - | 0.02 | - | - |

### [Summary]

The curable silicone compositions of Examples 1 to 7 of the present invention exhibit low viscosity and high fluidity when heated and melted, and can cure quickly at high temperature above the glass transition temperature of the thermoplastic resin constituting component (D), even when white or colored fillers are used, without sacrificing holding stability and storage stability. Furthermore, the resulting silicone cured product has very low surface tackiness, and therefore is expected to be suitable for use in protecting semiconductor devices and the like.

On the other hand, in Comparative Example 1, the softening point of the encapsulated catalyst used was not sufficiently high, so activation of the catalyst occurred during melt kneading, which is performed to obtain a uniform mixture, and the resulting composition did not exhibit sufficient storage stability. Furthermore, a catalyst triggered by ultraviolet light was used in Comparative Examples 2 to 4, but when an inorganic filler that absorbs or reflects light in the ultraviolet region is included, as in the composition of the present invention, it was found that the catalyst could not be activated and sufficient curing performance could not be achieved. On the other hand, in Comparative Examples 5 and 6, where an ordinary catalyst was used, an excessive amount of cure retarding agent is necessary to ensure sufficient storage stability, but using a large amount of cure retarding agent as in Comparative Example 5 inhibits curability, while in Comparative Example 6, curing itself is possible, but although the composition has relatively slow curing speed with an initial ts-1 exceeding 2 minutes at 150°C, ts-1 decreased more rapidly than in the Examples after storing for only one week at 40°C. Therefore, it was difficult to ensure the pot life of the obtained composition. Furthermore, as described in Comparative Examples 7 and 8, if excessive inorganic filler is added, the melt viscosity of the composition will be too high, and there is concern that the filling performance, especially for fine gaps and irregularities, will be insufficient, while at the same time, there is concern that wear will occur during production, and the target color will not be achieved.

### REFERENCE NUMERALS

1: Hot melter
2: Extruder
3-a: Powder feeder
3-b: Pump
3-c: Pump
3-d: Vacuum pump
4-a: Release sheet
4-b: Release sheet
5-a: Stretching roller (optionally further equipped with a temperature control function)
5-b: Stretching roller (optionally further equipped with a temperature control function)
6: Cooling roller
7: Film thickness meter
8: Sheet cutter
9: Foreign material inspecting machine

## Claims

1. A curable silicone composition, comprising:
(A) 100 parts by mass of an organopolysiloxane resin containing the following component (A1) and component (A2) in a mass ratio of 20:80 to 90:10, where the mass loss rate is 2.0 mass% or less after 1 hour exposure at 200°C;
(A1) an organopolysiloxane resin that is solid at 25°C, having a curing reactive functional group containing a carbon-carbon double bond in a molecule, containing 20 mol% or more of a siloxane unit as expressed by SiO_{4/2} of all siloxane units, and not independently having hot-melt properties;
(A2) an organopolysiloxane resin that is solid at 25°C, not having a curing reactive functional group containing a carbon-carbon double bond in a molecule, containing 20 mol% or more of a siloxane unit as expressed by SiO_{4/2} of all siloxane units, and not independently having hot-melt properties;
(B) 10 to 100 mass parts of a straight chain or branched organopolysiloxane that is liquid or has plasticity at 25°C, having at least two curing reactive functional groups having a carbon-carbon double bond in a molecule;
(C) an organohydrogenpolysiloxane having at least two silicon-bonded hydrogen atoms in a molecule at an amount where the number of hydrogen atoms bonded to a silicon atom per one alkenyl group bonded to a silicon atom included in the entire composition is 0.5 to 20.0;
(D) fine particles containing a hydrosilylation reaction catalyst, having a structure in which the hydrosilylation reaction catalyst is contained in a thermoplastic resin having a glass transition temperature (Tg) in a range of 110 to 200°C where the amount of platinum metal in the fine particles is 0.1 to 2000 ppm by mass; and
(E) fillers and pigments;
wherein the amount of component (E) is in a range of 0.01 to 100 parts by mass relative to a total of 100 parts by mass of the components (A) to (D), and the overall composition has hot-melt properties.

2. The curable silicone composition according to claim 1, further comprising: (F) a curing retarding agent for a hydrosilylation reaction with a boiling point of 200°C or higher under atmospheric pressure in an amount of 1 to 5000 ppm, based on the total mass of the composition.

3. The curable silicone composition according to claim 1 or claim 2, wherein in at least a portion of component (E) is a white or colored inorganic filler.

4. The curable silicone composition according to any one of claims 1 to 3,
wherein Component (A1) is (A1-1) an organopolysiloxane resin not independently having hot-melt properties, expressed by the following average unit formula:
(R¹₃SiO_{1/2})ₐ(R¹₂SiO_{2/2})_{b}(R¹SiO_{3/2})_{c}(SiO_{4/2})_{d}(R²O_{1/2})ₑ
(where each R¹ independently represents a monovalent hydrocarbon group with 1 to 10 carbon atoms, but 1 to 12 mol% of all R¹s in a molecule represents an alkenyl group; each R² represents a hydrogen atom or an alkyl group with 1 to 10 carbon atoms; and a, b, c, d, and e represent numbers that satisfy 0.10 ≤ a ≤ 0.60, 0 ≤ b ≤ 0.70, 0 ≤ c ≤ 0.80, 0 ≤ d ≤ 0.65, 0 ≤ e ≤ 0.05, but c + d > 0.20 and a + b + c + d = 1);
component (A2) is (A2-1) an organopolysiloxane resin not independently having hot-melt properties, expressed by the following average unit formula:
(R³₃SiO_{1/2})_{f}(R³₂SiO_{2/2})_{g}(R³SiO_{3/2})ₕ(SiO_{4/2})ᵢ(R²O_{1/2})ⱼ
(where each R³ independently represents a monovalent hydrocarbon group with 1 to 10 carbon atoms and that does not contain a carbon-carbon double bond; R² represents a hydrogen atom with an alkyl group with 1 to 10 carbon atoms; and f, g, h, i, and j represent numbers that satisfy 0.35 ≤ f < 0.55, 0 ≤ g ≤ 0.20, 0 ≤ h ≤ 0.20, 0.45 ≤ i ≤ 0.65, 0 ≤ j ≤ 0.05, and f + g + h + i = i); and
component (B) is a straight-chain diorganopolysiloxane expressed by the following structural formula (B1):
R⁴₃SiO(SiR⁴₂O)ₖSiR⁴₃⁴
(where each R⁴ independently represents a monovalent hydrocarbon group with 1 to 10 carbon atoms, but at least two of the R⁴s in one molecule represents an alkenyl group, and k represents a number from 20 to 5,000).

5. A curable silicone composition sheet or film, wherein the curable silicone composition according to any one of claims 1 to 4 is formed into a sheet or film with a thickness of 10 to 2000 µm.

6. A sheet or film-like adhesive, comprising the curable silicone composition sheet or film according to claim 5.

7. A releasable laminate body, comprising:
the curable silicone composition sheet or film according to claim 5; and
a sheet or film-like substrate adhered to one or two surfaces of the sheet or film, and having a release surface facing the sheet or film made of the curable silicone composition; wherein
the curable silicone composition sheet or film can be released from the sheet or film-like substrate having the release surface.

8. A laminate body, comprising:
a substrate serving as an electronic component or a precursor thereof; and
a curable silicone composition layer formed with at least one surface of the curable silicone composition sheet or film according to claim 5 firmly adhered to a portion or all of a front surface of the substrate; wherein
the curable silicone composition is in an uncured state.

9. A cured product, comprising: a curable silicone composition according to any one of claims 1 to 4, cured by heating above the glass transition temperature (Tg) of the thermoplastic resin constituting component (D).

10. Use of the cured product according to claim 9 as a member for a semiconductor device or a member for an optical semiconductor device.

11. A semiconductor device or optical semiconductor device, comprising a cured product according to claim 9.

12. A manufacturing method for the curable silicone composition sheet or film according to claim 5, comprising:
melting and kneading the entire composition within a temperature range of 50°C to the glass transition temperature (Tg) of the thermoplastic resin constituting component (D), and forming a sheet or film with a thickness of 10 to 2000 µm.

13. A manufacturing method for the laminate body according to claim 8, comprising: firmly adhering at least one surface of the curable silicone composition sheet or film according to claim 5 to a portion or all of a substrate serving as an electronic component or a precursor thereof, by one or more means selected from vacuum laminating, vacuum pressing, and compression molding.

14. A manufacturing method for a laminate body containing the cured product according to claim 9, comprising: curing an uncured curable silicone composition by heating the laminate body according to claim 8 at or above the glass transition temperature (Tg) of the thermoplastic resin containing component (D).

15. A manufacturing method for the laminate body containing the cured product according to claim 9, comprising:
forming a laminate body by firmly adhering at least one surface of the curable silicone composition sheet or film according to claim 5 to a portion or all of a substrate serving as an electronic component or a precursor thereof, by one or more means selected from vacuum laminating, vacuum pressing, and compression molding while curing the curable silicone composition sheet or film by heating above the glass transition temperature (Tg) of the thermoplastic resin constituting component (D).
